# EUROPEAN PATENT APPLICATION

(11) **EP 3 335 853 A1**
(43) Date of publication of application: **20.06.2018**
(21) Application number: 17205616.0
(22) Date of filing: 06.12.2017
(51) Int. Cl.: B29C 45/14

(54) **FILM INSERT MOLDED ARTICLE AND MANUFACTURING METHOD**

(30) Priority: 14.12.2016 JP 2016242270
(71) Applicant: Hosiden Corporation, Yao-shi, Osaka 581-0071 (JP)
(72) Inventor: SHIGA, Naoki, Osaka 581-0071 (JP); ISODA, Takeshi, Osaka 581-0071 (JP)
(74) Representative: Beresford Crump LLP

(57) **Abstract**

The invention provides a film insert molded article manufacturable at reduced cost, having a film insert that is unlikely to be peeled away from the molded plastic body. The molded article M1 includes a film insert 100 and a molded plastic body 200. The molded plastic body 200 is molded directly on the first main face 110 of the film insert 100. The molded plastic body 200 includes a main body 210 fixed directly to the first main face 110 and a fixing portion 220 having a cross section of generally inverted L-shape. The fixing portion 220 includes a first fixing portion 221 and a second fixing portion 222. The first fixing portion 221 extends from the main body 210 along a side face 130 of the film insert 100 and is fixed directly to a part or the whole of the side face 130. The second fixing portion 222 extends from the first fixing portion 221 along a second main face 120 of the film insert 100 and is fixed directly to an end portion of the second main face 120.

## Description

### Technical Field

The invention relates to film insert molded articles.

### Background Art

Conventionally, a film insert molded article includes a film insert and a molded plastic body, and the molded plastic body is molded directly on the film insert and fixed thereto with an adhesive such as a binder. As it cools and solidifies, the molded plastic body shrinks on the film insert. Such mold shrinkage creates stresses on both the molded plastic body and the film insert in directions away from each other. Due to the stresses continuously acting on the molded plastic body and the film insert, the film insert may peel away from the molded plastic body. Also, the film insert may peel away from the molded plastic body due to deterioration of the adhesive between the film insert and the molded plastic body of the film insert molded article, caused by ingress of moisture into between the film insert and the plastic material from the side face of the film insert molded article, and/or caused by heat of the outside air affecting the adhesive.

### Summary of Invention

### Technical Problem

Patent Publication No. JP 2012-206489 A describes a conventional film insert molded article that is aimed to reduce the possibility that a film insert is peeled away from a molded plastic body. This film insert molded article is manufactured such that the film insert is preformed so as to bend its end portions, and the end portions are embedded in the molded plastic body. Subjecting the end portions of the film insert to such preforming process requires extra time and effort, as well as an extra die for the preforming process, resulting in increased costs.

The invention has been made in the above circumstances and provides a film insert molded article manufacturable at reduced cost, having a film insert that is unlikely to be peeled away from the molded plastic body.

### Solution to Problem

To solve the above problem, a film insert molded article of a first aspect of the invention includes a film insert and a molded plastic body. The film insert includes a first main face, a second main face, and a side face. The first main face is a main face on one side of the film insert in a thickness direction thereof. The second main face is a main face on the other side of the film insert in the thickness direction and has an end or edge portion. The side face extends from the first main face to the second main face. The molded plastic body is molded directly on the first main face of the film insert. The molded plastic body includes a main body, which is fixed directly to the first main face, and a fixing portion with a cross section in the thickness direction of generally inverted L-shape. The fixing portion includes a first fixing portion and a second fixing portion. The first fixing portion extends from the main body along the side face of the film insert and is fixed directly to a part or whole of the side face. The second fixing portion extends from the first fixing portion along the second main face of the film insert and is fixed directly to the end or edge portion of the second main face.

In the film insert molded article of this aspect, the possibility is reduced that the film insert is peeled away from the molded plastic body because of the following arrangement. The first fixing portion extends from the main body along the side face of the film insert and is fixed directly to a part or the whole of the side face. The second fixing portion extends from the first fixing portion along the second main face of the film insert and is fixed directly to the end portion (the edge or peripheral region) of the second main face. Also, the film insert molded article is manufacturable at a reduced cost because of the following arrangement. The first fixing portion extends from the main body along the side face of the film insert, and the second fixing portion extends from the first fixing portion along the second main face of the film insert. This arrangement obviates the necessity to subject the film insert to a bending process such as a preforming process for the purpose of preventing peeling between the film insert and the molded plastic body as in the above conventional example.

A plurality of second fixing portions may be provided and arranged at spaced intervals along the end or edge portion of the second main face of the film insert. Each of the second fixing portions may be fixed directly to a respective part of the end portion of the second main face of the film insert. The end portion of the second main face of the film insert may be partly exposed between the second fixing portions.

The film insert molded article of this aspect is improved in production yield because of the following arrangement. The end portion of the second main face of the film insert is partly exposed from between the second fixing portions (this part will be hereinafter referred to as an exposed portion or portions). When the molded plastic body is molded on the first main face of the film insert, the second main face of the film insert is directly placed on a support face of a mold. The portion of the side face of the film insert to be fixed to the first fixing portion faces a first recess of the mold for forming the first fixing portion. The portions of the second main face of the film insert to be fixed to the second fixing portions face second recesses of the mold for forming the second fixing portions. The or each exposed portion of the second main face of the film insert is supported by an abutting portion between two second recesses of the mold. This arrangement reduces the possibility that the flow of the plastic material injected into the cavity of the mold moves the end portion of the film insert toward the second recesses of the mold and causes deformation of the end portion of the film insert.

The film insert may further include at least one first portion and at least one second portion formed by cutting or otherwise forming an edge region of the film insert. The first and second portions may extend inwardly from the edge of the film insert, with each first portion positioned between two second portions, and vice versa. The at least one first portion may preferably be curved or bent, while the at least one second portion extends in the plane of the film insert. The main body may be fixed directly to a region of the first main face of the film insert, and this region of the first main face may be other than the at least one second portion. The first fixing portion may be fixed directly to a region of the side face of the film insert, and this region of the side face may be other than the at least one second portion. The second fixing portion may be fixed directly to a region of the second main face of the film insert, and this region of the second main face may be other than the at least one second portion.

A film insert molded article of a second aspect of the invention includes a film insert and a molded plastic body. The film insert includes the first main face, the second main face, a through hole extending through the film insert from the first main face to the second main face, and a wall of the through hole. The molded plastic body is molded directly on the first main face of the film insert. The molded plastic body includes a main body, which is fixed directly to the first main face, and a fixing portion with a cross section in the thickness direction of generally T-shape or of generally inverted L-shape. The fixing portion includes a third fixing portion and a fourth fixing portion. The third fixing portion extends from the main body along the through hole of the film insert, fills the through hole, and is fixed directly to the wall of the through hole. The fourth fixing portion extends from the third fixing portion along the second main face of the film insert and is fixed directly to a rim of the through hole on the second main face.

In the film insert molded article of this aspect, the possibility is reduced that the film insert is peeled away from the molded plastic body because of the following arrangement. The third fixing portion extends from the main body along the through hole of the film insert and is fixed directly to the wall of the through hole. The fourth fixing portion extends from the third fixing portion along the second main face of the film insert and is fixed directly to the rim of the through hole on the second main face of the film insert. Also, the film insert molded article is manufacturable at a reduced cost because of the following arrangement. The third fixing portion extends from the main body along the through hole of the film insert, and the fourth fixing portion extends from the third fixing portion along the second main face of the film insert. This arrangement obviates the necessity to subject the film insert to a bending process such as a preforming process for the purpose of preventing peeling between the film insert and the molded plastic body as in the above conventional example.

The fourth fixing portion may have such a shape that partly exposes the rim of the through hole on the second main face of the film insert. For example, if the fixing portion has a cross section of generally lateral T-shape, the following configuration 1) or 2) may be adopted. 1) The fourth fixing portion may have at least one cut-out for partly exposing the rim of the through hole on the second main face of the film insert. 2) The fourth fixing portion is fixed in the longitudinal direction directly to the rim of the through hole on the second main face of the film insert, while in the widthwise direction of the fourth fixing portion the rim of the through hole on the second main face of the film insert is exposed. Alternatively, if the fixing portion has a cross section of generally inverted L-shape, the fourth fixing portion is fixed to a part of the rim of the through hole on the second main face of the film insert, and the remaining part of the rim is exposed.

The film insert molded article of this aspect is improved in production yield. The rim of the through hole on the second main face of the film insert is not covered with the fourth fixing portion and is partly exposed (this part will be hereinafter referred to as an exposed portion). When the molded plastic body is molded on the first main face of the film insert, the second main face of the film insert is directly placed on a support face of a mold. The portion of the second main face of the film insert to be fixed to the fourth portion faces a recess of the mold for forming the fourth fixing portion. The exposed portion of the second main face of the film insert is supported by the support face of the mold. This arrangement reduces the possibility that the flow of the plastic material injected into the cavity of the mold moves the rim of the through hole of the film insert toward the support face of the mold and causes deformation of the end portion of the film insert.

The fixing portion may further include a first fixing portion in addition to the third fixing portion and the fourth fixing portion. In this case, the first fixing portion may extend from the main body along the side face of the film insert and may be fixed directly to a part or whole of the side face of the film insert. The fourth fixing portion may be fixed directly to the second main face of the film insert and interconnect the third fixing portion and the first fixing portion.

In the molded article of this aspect, the possibility is further reduced that the film insert is peeled away from the molded plastic body because of the following arrangement. The first fixing portion is fixed directly to the side face of the film insert, the third fixing portion is fixed directly to the wall of the through hole of the film insert, and the fourth fixing portion is fixed directly to the second main face of the film insert and interconnects the third fixing portion and the first fixing portion.

A film insert molded article of a third aspect of the invention includes a film insert and molded plastic body. The film insert includes the first main face, the second main face, the side face, a lateral hole extending from the side face in a direction crossing the thickness direction, and a wall of the lateral hole. The molded plastic body is molded directly on the first main face of the film insert. The molded plastic body includes a main body, which is fixed directly to the first main face, and a fixing portion with a cross section in the thickness direction of generally lateral T-shape or of generally inverted L-shape. The fixing portion includes a fifth fixing portion and a sixth fixing portion. The fifth fixing portion extends from the main body along the side face of the film insert and is fixed directly to a part or whole of the side face. The sixth fixing portion extends from the fifth fixing portion along the lateral hole, fills the lateral hole, and is fixed directly to the wall of the lateral hole.

In the film insert molded article of this aspect, the possibility is reduced that the film insert is peeled away from the molded plastic body because of the following arrangement. The fifth fixing portion extends from the main body along the side face of the film insert and is fixed directly to a part or the whole of the side face. The sixth fixing portion extends from the fifth fixing portion along the lateral hole of the film insert and is fixed directly to the wall of the lateral hole of the film insert. Also, the film insert molded article is manufacturable at a reduced cost because of the following arrangement. The fifth fixing portion extends from the main body along the side face of the film insert, and the sixth fixing portion extends from the fifth fixing portion along the lateral hole of the film insert. This arrangement obviates the necessity to subject the film insert to a bending process such as a preforming process for the purpose of preventing peeling between the film insert and the molded plastic body as in the conventional example.

A film insert molded article of a fourth aspect of the invention includes a film insert and molded plastic body. The film insert includes the first main face, the second main face, a vertical hole extending from the first main face toward the second main face, a lateral hole communicating with the vertical hole and extending from the vertical hole in a direction crossing the thickness direction, a wall of the vertical hole, and a wall of the lateral hole. The molded plastic body is molded directly on the first main face of the film insert. The molded plastic body includes a main body, which is fixed directly to the first main face, and a fixing portion with a cross section in the thickness direction of generally inverted L-shape or of generally lateral T-shape. The fixing portion includes a seventh fixing portion and an eighth fixing portion. The seventh fixing portion extends from the main body along the vertical hole of the film insert and is fixed directly to the wall of the vertical hole. The eighth fixing portion extends from the seventh fixing portion along the lateral hole, fills the lateral hole, and is fixed directly to the wall of the lateral hole.

In the film insert molded article of this aspect, the possibility is reduced that the film insert is peeled away from the molded plastic body because of the following arrangement. The seventh fixing portion extends from the main body along the vertical hole of the film insert and is fixed directly to the wall of the vertical hole. The eighth fixing portion extends from the seventh fixing portion along the lateral hole of the film insert and is fixed directly to the wall of the lateral hole of the film insert. Also, the film insert molded article is manufacturable at a reduced cost because of the following arrangement. The seventh fixing portion extends from the main body along the vertical hole of the film insert, and the eighth fixing portion extends from the seventh fixing portion along the lateral hole of the film insert. This arrangement obviates the necessity to subject the film insert to a bending process such as a preforming process for the purpose of preventing peeling between the film insert and the molded plastic body as in the conventional example.

The film insert of any of the above aspects and the molded plastic body of any of the above aspects may preferably be made of materials compatible with and/or weldable to each other. For example, the film insert and the molded plastic body may be made of the same kind of plastic materials, the same plastic material, polymer alloys containing the same kind of plastic materials, or polymer alloys containing the same plastic material. In the molded article of this aspect, the film insert and the molded plastic body are more firmly fixed to each other.

The film insert of any of the above aspects may be a capacitive touch sensor and may include a plurality of films laminated together in the thickness direction. In a conventional molded article having a plurality of films laminated together in the thickness direction, stresses are exerted on both the molded plastic body and the film insert in directions away from each other as described above. Such stresses exerted on the laminated films, there is a possibility that two adjacent films of the laminated films are peeled away from each other. However, in the molded article of any of the above aspects, the possibility is reduced that two adjacent films of the laminated films are peeled away from each other. This is because the fixing portion is fixed to the film insert as described above.

The main body of any of the above aspects may include a fixing face, and the fixing face may be curved such as to form a curved surface and fixed to the film insert. The film insert may be curved such as to have a curved surface extending along the fixing face.

It should be noted that the film insert of any of the above aspects may be entirely flat or curved. This film insert is not subjected to a bending processing or the like to prevent the separation of the film insert from the molded plastic body.

A film insert molding method of a first aspect of the invention includes:
preparing a film insert, the film insert including a first main face, a second main face opposite to the first main face, and a side face extending from the first main face to the second main face;
placing the second main face of the film insert directly on a support face of a first mold such that a part or whole of the side face of the film insert faces a first recess of a cavity of the first mold and a second mold, and such that a part or whole of an end portion of the second main face of the film insert faces a second recess of the cavity;
closing the first and second molds together and thereby placing the film insert into the cavity;
injecting plastic material onto the first main face of the film insert in the cavity such that the plastic material partly flows into the first recess and the second recess; and
cooling and solidifying the plastic material filled in the cavity, so that part of the plastic material in the first recess forms a first fixing portion fixed directly to the part or whole of the side face of the film insert, another part of the plastic material in the second recess forms a second fixing portion fixed directly to the part or whole of the end portion of the second main face of the film insert, and still another part of the plastic material in the cavity excluding the first and second recesses forms a main body fixed directly onto the first main face of the film insert.

The first recess may be at least one, and the second recess may include a plurality of second recesses. Abutting portions may be provided next to the respective second recesses in the cavity. In this case, the placing the film insert may include placing portions of the end portion of the second main face of the film insert such as to face the respective second recesses and placing the abutting portions next to the second recesses such as to abut other portions of the end portion of the second main face of the film insert. The injecting the plastic material may include injecting the plastic material such that the plastic material partly flows into the at least one first recess and the second recesses. The cooling and solidifying the plastic material may include fixing second fixing portions directly to portions of the end portion of the second main face of the film insert, the second fixing portions being part of the plastic material in the second recesses.

A film insert molding method of a second aspect of the invention includes:
preparing a film insert, the film insert including a first main face, a second main face opposite to the first main face, and a through hole extending from the first main face to the second main face;
placing the second main face of the film insert directly on a support face of a first mold such that the through hole of the film insert communicates with a bottomed (blind) hole in the support face of the first mold;
closing the first mold and a second mold together and thereby placing the film insert into a cavity of the first and second molds;
injecting plastic material onto the first main face of the film insert in the cavity such that the plastic material partly flows into the through hole and the bottomed hole; and
cooling and solidifying the plastic material filled in the cavity, so that part of the plastic material in the through hole forms a third fixing portion fixed directly to a wall of the through hole of the film insert, another part of the plastic material in the bottomed hole forms a fourth fixing portion fixed directly to a rim of the through hole on the second main face of the film insert, and still another part of the plastic material in the cavity forms a main body fixed directly onto the first main face of the film insert.

If the fourth fixing portion is shaped such as to partly expose the rim of the through hole on the second main face of the film insert, the rim of the through hole on the second main face of the film insert may include an exposed portion exposed from the fourth fixing portion. The placing of the film insert may include bringing the support face into abutment with the exposed portion.

The cavity may have a recess. The bottomed hole may extend along the second main face of the film insert placed on the support face and communicate with the recess. In this case, the placing the film insert may include that placing a part or whole of the side face of the film insert such as to face the recess. The injecting the plastic material may include allowing the plastic material to partly flow into the recess so that the plastic material in the recess is integrated with the plastic material in the bottomed hole. The cooling and solidifying the plastic material may include that allowing part of the plastic material in the recess to serve as a first fixing portion fixed directly to the part or whole of the side face of the film insert.

A film insert molding method of a third aspect of the invention includes:
preparing a film insert, the film insert including a first main face, a second main face opposite to the first main face, a side face extending from the first main face to the second main face, and a lateral hole extending from the side face;
placing the second main face of the film insert directly on a support face of a fifth mold such that a part or whole of the side face of the film insert faces a recess of a cavity of the fifth mold and a sixth mold;
closing the fifth and sixth molds together and thereby placing the film insert into the cavity;
injecting plastic material onto the first main face of the film insert in the cavity such that the plastic material partly flows into the recess and the lateral hole; and
cooling and solidifying the plastic material filled in the cavity, so that part of the plastic material in the recess forms a fifth fixing portion fixed directly to the part or whole of the side face of the film insert, another part of the plastic material in the lateral hole forms a sixth fixing portion fixed directly to a wall of the lateral hole of the film insert, and still another part of the plastic material in the cavity excluding the recess forms a main body fixed directly onto the first main face of the film insert.

A film insert molding method of a fourth aspect of the invention includes:
preparing a film insert, the film insert including a first main face, a second main face opposite to the first main face, a vertical hole extending from the first main face toward the second main face, and a lateral hole communicating with and extending from the vertical hole;
placing the second main face of the film insert directly on a support face of a seventh mold;
closing the seventh mold and an eighth mold together and thereby placing the film insert into the cavity;
injecting plastic material onto the first main face of the film insert in the cavity such that the plastic material partly flows into the vertical hole and the lateral hole; and
cooling and solidifying the plastic material filled in the cavity, so that part of the plastic material in the vertical hole forms a seventh fixing portion fixed directly to a wall of the vertical hole of the film insert, another part of the plastic material in the lateral hole forms an eighth fixing portion fixed directly to a wall of the lateral hole of the film insert, and still another part of the plastic material in the cavity forms a main body of a molded plastic body fixed directly onto the first main face of the film insert.

### Brief Description of Drawings

Fig. 1A is a schematic perspective view, and a partial cross-sectional view take along line 1A-1A, of a film insert molded article according to the first embodiment of the invention.
Fig. 1B is a schematic perspective view, and a partial cross-sectional view take along line 1B-1B, of a film insert molded article of another aspect according to the first embodiment of the invention.
Fig. 1C is a schematic perspective view, and a partial cross-sectional view take along line 1C-1C, of a film insert molded article of still another aspect according to the first embodiment of the invention.
Fig. 2A is a schematic cross-sectional view of a film insert of an aspect of the film insert molded article of any of the above aspects.
Fig. 2B is a schematic cross-sectional view of a film insert of another aspect of the film insert molded article of any of the above aspects.
Fig. 2C is a schematic cross-sectional view of a film insert of still another aspect of the film insert molded article of any of the above aspects.
Fig. 2D is a schematic cross-sectional view of a film insert of still another aspect of the film insert molded article of any of the above aspects.
Fig. 3 is a schematic cross-sectional view of first and second molds for manufacturing the film insert molded article of any of the above aspects, and also a schematic cross-sectional view of the film insert disposed in the cavity of the first and second molds.
Fig. 4A is a schematic cross-sectional view of a first variant of the film insert molded article according to the first embodiment of the invention.
Fig. 4B is a schematic partial perspective view of a second variant of the film insert molded article according to the first embodiment of the invention.
Fig. 4C is a schematic partial perspective view of a third variant of the film insert molded article according to the first embodiment of the invention.
Fig. 4D is a schematic partial perspective view of a fourth variant of the film insert molded article according to the first embodiment of the invention.
Fig. 5 is a partial perspective view, and a partial cross-sectional view take along line 5-5, of a film insert molded article according to the second embodiment of the invention.
Fig. 6 is a partial cross-sectional view of a film insert molded article of another aspect according to the second embodiment of the invention.
Fig. 7 is a partial cross-sectional view of a film insert molded article of still another aspect according to the second embodiment of the invention.
Fig. 8 is a partial cross-sectional view of a film insert molded article of yet another aspect according to the second embodiment of the invention.
Fig. 9 is a schematic perspective view, and a partial cross-sectional view take along line 9-9, of a film insert molded article according to the third embodiment of the invention.
Fig. 10 is a schematic perspective view, and a partial cross-sectional view take along line 10-10, of a film insert molded article according to the forth embodiment of the invention.
Fig. 11 is a partial cross-sectional view of a film insert molded article of another aspect according to the forth embodiment of the invention.
Fig. 12 is a partial cross-sectional view of a film insert molded article of still another aspect according to the forth embodiment of the invention.

In the brief description of the drawings above and the description of embodiments which follows, relative spatial terms such as "upper", "lower", "top", "bottom", "left", "right", "front", "rear", etc., are used for the convenience of the skilled reader and refer to the orientation of the film insert molded articles and their constituent parts as depicted in the drawings. No limitation is intended by use of these terms, either in use of the invention, during its manufacture, shipment, custody, or sale, or during assembly of its constituent parts or when incorporated into or combined with other apparatus.

### Description of Embodiments

The following discussion is directed to embodiments 1 to 4 of the invention.

### First embodiment

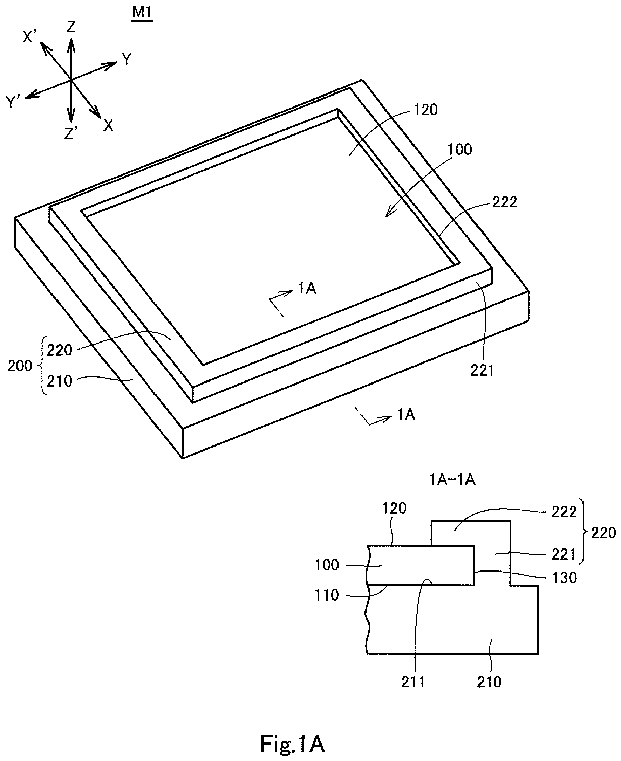

The following is a description, with reference to Figs. 1A to 2D, of a film insert molded article M1 (which may be hereinafter referred to simply as a "molded article M1") according to a plurality of embodiments including the first embodiment of the invention. The molded article M1 includes a film insert 100 and a molded plastic body 200. It should be appreciated that the Z-Z' direction shown in Figs. 1A to 2D is the thickness direction of the film insert 100; the Y-Y' direction shown in Figs. 1A to 2D is orthogonal to the Z-Z' direction; and the X-X' direction shown in Figs. 1A to 1C is orthogonal to the Z-Z' and Y-Y' directions.

The film insert 100 may be constituted by a single film made of plastic material (e.g. polycarbonate (PC), polymethyl methacrylate (PMMA), acrylonitrile butadiene styrene (ABS) polymer, polyethylene terephthalate (PET), cycloolefin polymer (COP)). The film insert 100 may be constituted by a plurality of films of the said plastic material laminated together in the Z-Z' direction. The film insert 100 may be translucent or transparent. The film insert 100 may be decorated by printing, i.e. may be opaque. The film insert 100 may be entirely flat as shown in Figs. 1A to 1C. The film insert 100 may be, for example, discoid or polygonal.

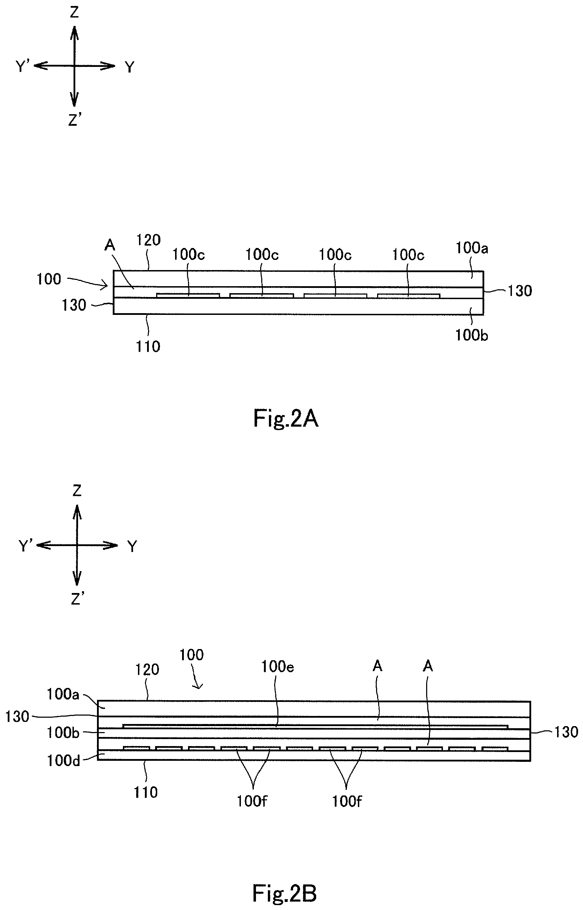

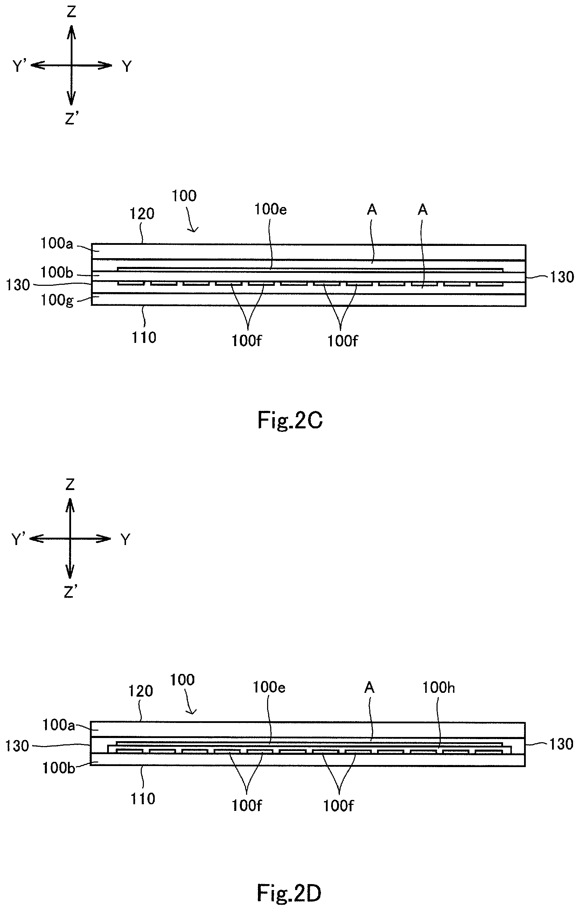

The film insert 100, if constituted by one or more plastic films, may be a capacitive touch sensor. In this case, the film insert 100 may be a touch sensor of either a projected capacitive type or a surface capacitive type. If of a projected capacitive type, the film insert 100 may have, for example, one of the following structures A) to D):
A) As shown in Fig. 2A, the film insert 100 may include a cover film 100a, a base film 100b, and a plurality of electrodes 100c. The electrodes 100c are of polygonal, round, or other shape and formed directly on the Z-direction-side face of the base film 100b such as to be arranged at spaced intervals (e.g., in a matrix array). The Z-direction-side face of the base film 100b and the cover film 100a are bonded together with an adhesive A or other means.
B) As shown in Fig. 2B, the film insert 100 may include a cover film 100a, a base film 100b, a base film 100d, a plurality of first electrodes 100e (only one of them is shown), and a plurality of second electrodes 100f. The first electrodes 100e are formed directly on the Z-direction-side face of the base film 100b such as to extend in the Y-Y' direction and be arranged at spaced intervals in the X-X' direction. The Z-direction-side face of the base film 100b and the cover film 100a are bonded together with an adhesive A or other means. The second electrodes 100f are formed directly on the Z-direction-side face of the base film 100d such as to extend in the X-X' direction and be arranged at spaced intervals in the Y-Y' direction. The Z-direction-side face of the base film 100d and the Z'-direction-side face of the base film 100b are bonded together with another adhesive A or other means.
C) As shown in Fig. 2C, the film insert 100 may include a cover film 100a, a base film 100b, a plurality of first electrodes 100e, a plurality of second electrodes 100f, and a protective film 100g. The first electrodes 100e are formed directly on the Z-direction-side face of the base film 100b in the above described arrangement. The Z-direction-side face of the base film 100b and the cover film 100a are bonded together with an adhesive A or other means. The second electrodes 100f are formed directly on the Z'-direction-side face of the base film 100b such as to extend in the X-X' direction and be arranged at spaced intervals in the Y-Y' direction. The Z'-direction-side face of the base film 100b and the protective film 100g are bonded together with another adhesive A or other means.
D) As shown in Fig. 2D, the film insert 100 may include a cover film 100a, a base film 100b, a plurality of first electrodes 100e, a plurality of second electrodes 100f, and an insulating layer 100h. The first electrodes 100e are formed directly on the Z-direction-side face of the base film 100b100b in the above described arrangement. The insulating layer 100h is formed directly on the Z-direction-side face of the base film 100b such as to cover the first electrodes 100e. The second electrodes 100f are directly formed on the insulating layer 100h such as to extend in the X-X' direction and be arranged at spaced intervals in the Y-Y' direction. The Z-direction-side face of the base film 100b and the cover film 100a are bonded together with an adhesive A or other means.

If the film insert 100 is a surface capacitive touch sensor, it may include a cover film 100a, a base film 100b, and an electrode (not shown). The cover film 100a and the Z-direction-side face of the base film 100b are bonded together with an adhesive A or other means. The electrode is formed directly on the Z-direction-side face of the base film 100b such as to be positioned between the base film 100b and the cover film 100a.

It should be noted that the film insert 100 is not limited to a capacitive touch sensor. For example, the film insert 100 may be constituted by two plastic films bonded together and a sensor held therebetween, and the sensor may be of type other than a capacitive touch type (e.g., a resistive touch sensor, a gyro sensor, etc.), a piezoelectric device, a photodiode, or other device. The film insert moulded article may be mounted to or in, or form part of, a larger electronic device.

The film insert 100 includes a first main face 110, a second main face 120, and at least one side face 130. The first main face 110 is the Z-direction-side face of the film insert 100, and the second main face 120 is the Z'-direction-side face of the film insert 100. As used herein a "main face" of the film insert means a face of a much larger area than other faces (a side face in the first embodiment).

The at least one side face 130 extends from the first main face 110 to the second main face 120. If the film insert 100 is discoid, one side face 130 is provided as a tuboid outer peripheral face of the film insert 100. If the film insert 100 is polygonal, a plurality of side faces 130 is provided as rectangular end faces on a plurality of sides of the film insert 100.

The molded plastic body 200 is molded directly on the first main face 110 of the film insert 100. The molded plastic body 200 includes a main body 210 and at least one fixing portion 220. The main body 210 is fixed directly to (in intimate contact with) the first main face 110 of the film insert 100. The main body 210 has a fixing face 211 fixed directly to (in intimate contact with) the first main face 110 of the film insert 100. The fixing face 211 is a flat face. The or each fixing portion 220 has a cross section in the Z-Z' direction of generally inverted L-shape. The or each fixing portion 220 includes at least one first fixing portion 221 and at least one second fixing portion 222.

The or each first fixing portion 221 extends from the main body 210 along the corresponding side face 130 of the film insert 100 and is fixed directly to (in intimate contact with) a part or the whole of a corresponding side face 130. The or each second fixing portion 222 extends from a corresponding first fixing portion 221 along the second main face 120 of the film insert 100 and is fixed directly to (in intimate contact with) a corresponding end portion of the second main face 120.

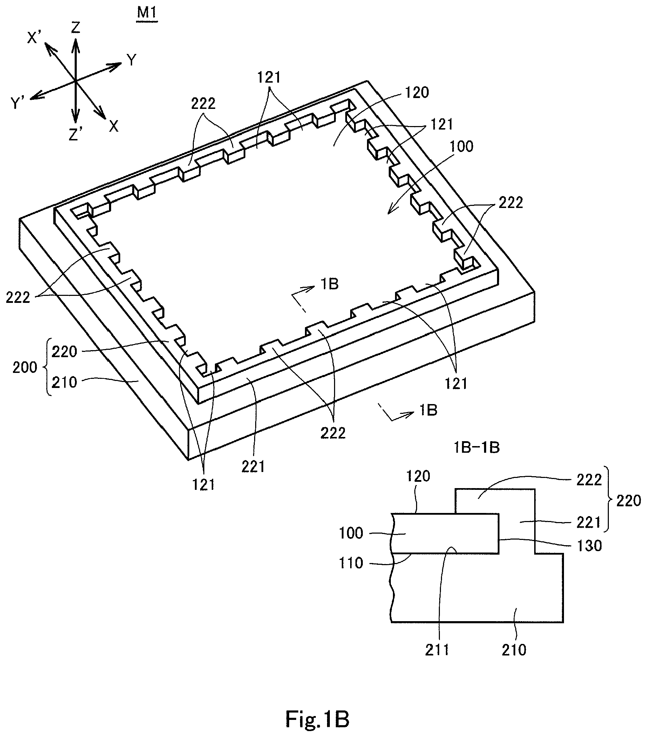

If a single fixing portion 220 is provided, the fixing portion 220 includes a single first fixing portion 221 and at least one second fixing portion 222. The first fixing portion 221 may be a loop-shaped body extending from the main body 210 along the side face 130 of the film insert 100 such as to be arranged along the entire periphery of the film insert 100. In this case, the first fixing portion 221 is fixed directly to the whole(s) of the side face(s) 130 of the film insert 100. It should be understood that if the film insert 100 is discoid, the first fixing portion 221 is tuboid, and if the film insert 100 is polygonal, the first fixing portion 221 is polygonal tuboid (see Figs. 1A and 1B). For the single first fixing portion 221, one or a plurality of second fixing portions 222 may be provided. In the former case, the second fixing portion 222 may preferably be a loop-shaped flange as shown in Fig. 1A. In the latter case, the second fixing portions 222 may be elongated blocks extending along the first fixing portion 221 or may be short blocks (see Fig. 1B).

If a plurality of the fixing portions 220 is provided, the fixing portions 220 may have, for example, one of the following configurations 1) to 4). Configuration 1): each fixing portion 220 includes a single first fixing portion 221 and a single or a plurality of second fixing portions 222. The first fixing portion 221 of each fixing portion 220 is an elongated block extending from the main body 210 along a corresponding side face 130 of the film insert 100 of polygonal shape in the Z-Z' direction and also in the longitudinal direction of the side face 130, and it is fixed directly to the whole of the side face 130. The or each second fixing portion 222 is a flange extending from the corresponding first fixing portion 221 along the second main face 120 of the polygonal film insert 100, and it is fixed directly to a part or the whole of a corresponding end portion of the second main face 120. If two fixing portions 220 are provided, the first fixing portions 221 of the two fixing portions 220 may be elongated blocks fixed directly to the respective wholes of the Y- and Y'-direction-side side faces 130 of the film insert 100 of rectangular shape. Alternatively, the first fixing portions 221 of the two fixing portions 220 may be elongated blocks fixed directly to the respective wholes of the X- and X'-direction side faces 130 of the rectangular film insert 100.

Configuration 2): each fixing portion 220 includes a single first fixing portion 221 and a plurality of second fixing portions 222. The first fixing portions 221 of the plurality of fixing portions 220 are arc-shaped or elongated blocks extending in the Z-Z' direction from the main body 210 along the corresponding side face(s) 130 of the film insert 100 such as to be positioned at spaced intervals along the side face(s) 130, and each of the first fixing portions 221 are fixed directly to a part of the corresponding side face 130. This means that the or each side face 130 of the film insert 100 is provided with a plurality of first fixing portions 221. In this case, the plurality of second fixing portions 222 of each fixing portion 220 are flanges extending from the first fixing portion 221 along the second main face 120 of the film insert 100 and being arranged at spaced intervals along the first fixing portion 221, and each of the second fixing portions 222 are fixed directly to a part of a corresponding end portion of the second main face 120.

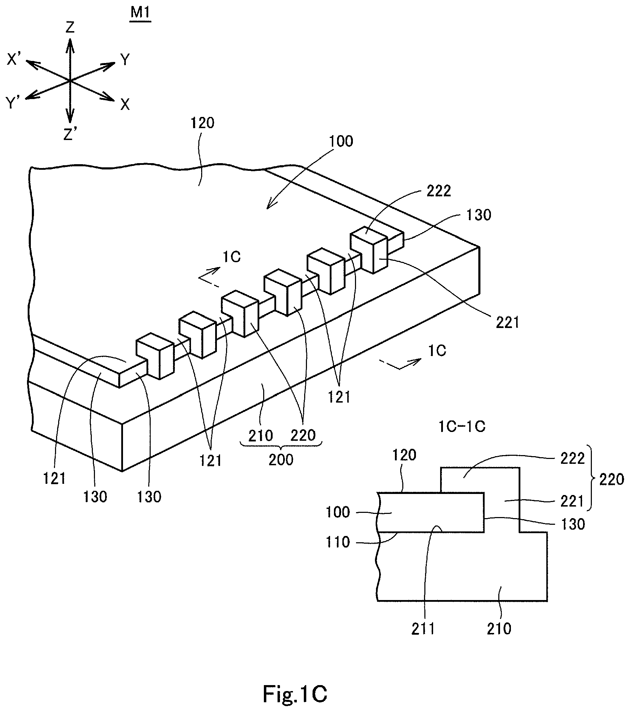

Configuration 3): each fixing portion 220 includes a single first fixing portion 221 and a single second fixing portion 222. The first fixing portions 221 of the plurality of fixing portions 220 are short blocks extending in the Z-Z' direction from the main body 210 along the corresponding side face(s) 130 of the film insert 100 such as to be positioned at spaced intervals along the at least one side face(s) 130, and each of the first fixing portions 221 are fixed directly to a part of the corresponding side face 130 (see. Fig. 1C). This means that the or each side face 130 of the film insert 100 is provided with a plurality of first fixing portions 221. In this case, the second fixing portion 222 of each fixing portion 220 is a flange extending from the first fixing portion 221 along the second main face 120 of the film insert 100, and it is fixed directly to a part of a corresponding end portion of the second main face 120 of the film insert 100.

Configuration 4): each fixing portion 220 includes a single first fixing portion 221 and a single second fixing portion 222. The first fixing portion 221 of each fixing portion 220 is a block extending in the Z-Z' direction from the main body 210 along a corresponding side face 130 of the film insert 100 such as to be positioned in the vicinity of a part of the side face 130 (e.g., a corner), and it is fixed directly to the part of the side face 130. The second fixing portion 222 of each fixing portion 220 is a flange extending from the first fixing portion 221 along the second main face 120 of the film insert 100, and it is fixed directly to a part of a corresponding end portion of the second main face 120 of the film insert 100.

If a plurality of the second fixing portions 222 is provided, i.e., if the single fixing portion 220 includes a plurality of the second fixing portions 222 or if the plurality of fixing portions 220 includes the single second fixing portion 222 or a plurality of the second fixing portions 222, at least one of the end portions of the second main face 120 of the film insert 100 has portions (hereinafter referred to as exposed portions 121) exposed from between the corresponding second fixing portions 222. In other words, the exposed portions 121 of an end portion of the second main face 120 of the film insert 100 are exposed at locations next to the corresponding second fixing portions 222.

The film insert 100 and the molded plastic body 200 may be made of materials compatible with and/or weldable to each other. In this case, the film insert 100 and the molded plastic body 200 may preferably be, but are not required to be, made of the same kind of plastic materials, the same plastic material, polymer alloys containing the same kind of plastic materials, or polymer alloys containing the same plastic material. The film insert 100 and the molded plastic body 200 may be fixed to each other more firmly by any of the following means. The main body 210 of the molded plastic body 200 may be welded or fused directly to the first main face 110 of the film insert 100. The or each first fixing portion 221 may be welded or fused directly to a part or the whole of the corresponding side face 130 of the film insert 100. The or each second fixing portion 222 may be welded or fused directly to the corresponding end portion of the second main face 120 of the film insert 100.

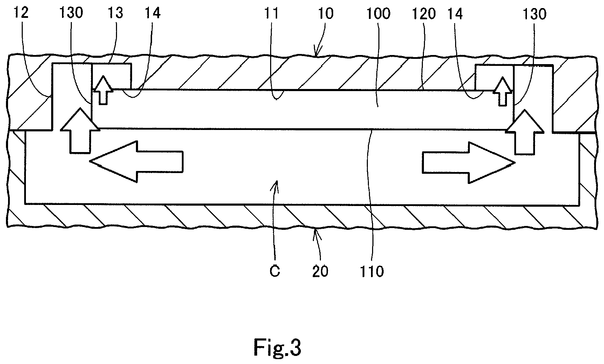

The following discussion is directed, with reference to Fig. 3, to a first mold 10 and a second mold 20 to be used for a film insert molding method of the molded article M1 of any of the above aspects. The first mold 10 and the second mold 20 as combined provides a cavity C of a shape conforming to the outer shape of the molded article M1. The first mold 10 includes a support face 11, at least one first recess 12 and at least one second recess 13. The support face 11 may be brought into surface contact with the second main face 120 of the film insert 100 when the film insert 100 is placed into the cavity C. The or each second recess 13 (to be described) is to face a part of an end portion of the second main face 120, and such part will not be brought into contact with the support face 11. The cavity C includes the at least one first recess 12 and the at least one second recess 13. The part of the cavity C other than the first recess 12 and the second recess 13 will be referred to as a main part of the cavity C. The main part is of a shape conforming to the outer shape of the combination of the film insert 100 and the main body 210.

The or each first recess 12 in the first mold 10 extends in the Z-Z' direction so as to be arranged along a part or the whole of the corresponding side face 130 of the film insert 100 when the film insert 100 is in surface contact with the support face 11. The or each first recess 12 conforms to the outer shape of the corresponding first fixing portion 221 of any of the above aspects, opens in the Z' direction and also opens to the corresponding side face 130 of the film insert when the film insert 100 is in surface contact with the support face 11. The or each first recess 12 may be opposed to a part or the whole of the corresponding side face 130 of the film insert 100 when the film insert 100 is in surface contact with the support face 11. If a plurality of the first fixing portions 221 is provided, a plurality of the first recesses 12 is accordingly provided. In this case, the first recesses 12 are arranged at positions corresponding to the first fixing portions 221.

The or each second recess 13 is provided outside the support face 11 and extend inward from the corresponding first recess 12 so as to be arranged along the second main face 120 of the film insert 100 when the film insert 100 is in surface contact with the support face 11. The or each second recess 13 conforms to the outer shape of the corresponding second fixing portion 222 of any of the above aspects, communicates with the corresponding first recess 12, and opens to the second main face 120 of the film insert 100 when the film insert 100 is in surface contact with the support face 11. The second recess 13 may face a part or the whole of the corresponding end portion of the second main face 120 of the film insert 100 when the film insert 100 is in surface contact with the support face 11. If a plurality of the second fixing portions 222 is provided, a plurality of the second recesses 13 is accordingly provided. In this case, the second recesses 13 are disposed at positions corresponding to the second fixing portions 222.

The first mold 10 may further include a plurality of abutting portions 14. In this case, a plurality of the second recesses 13 is provided. The abutting portions 14 are projections arranged next to the respective second recesses 13. The Z'-direction-side faces of the abutting portions 14 are continuous with the support face 11. The Z'-direction-side faces of the abutting portions 14 are positioned at the same height position in the Z -Z' direction as the support face 11. The abutting portions 14 are abuttable on the respective exposed portions 121 of the second main face 120 of the film insert 100. The abutting portions 14 may be omitted.

The molding method will be hereinafter described with reference to Fig. 3. The flat film insert 100 is prepared. The second main face 120 of the film insert 100 is partly placed directly on the support face 11 of the first mold 10. At this time, a part or the whole of the or each side face 130 of the film insert 100 faces the corresponding first recess 12 of the first mold 10, and a part or the whole of the or each end portion of the second main face 120 of the film insert 100 faces the corresponding second recess 13 of the first mold 10. That is, in the or each end portion of the second main face 120, the or each part facing the corresponding second recess 13 is not in contact with the support face 11.

Thereafter, the first mold 10 and the second mold 20 are closed together. The film insert 100 is thus disposed in the main part of the cavity C of the first and second molds 10, 20. Thereafter, plastic material is injected onto the first main face 110 of the film insert 100 inside the main part of the cavity C. As a result, the plastic material fills the main part of the cavity C and partly flows through the at least one first recess 12 into the at least one second recess 13.

Thereafter, the plastic material filling the cavity C cools and solidifies. The solidified plastic material becomes the molded plastic body 200. More particularly, of the solidified plastic material, the plastic material in the main part of the cavity C becomes the main body 210, which is fixed directly to the first main face 110 of the film insert 100; the plastic material in the at least one first recess 12 becomes the at least one first fixing portion 221, which or each of which is fixed directly to a part or the whole of the corresponding side face 130 of the film insert 100; the plastic material in the at least one second recess 13 becomes the at least one second fixing portion 222, which or each of which is fixed directly to a part or the whole of the corresponding end portion of the second main face 120 of the film insert 100. The next step is to open the first and second molds 10, 20 to remove therefrom the film insert 100 and the molded plastic body 200. Thus the molded plastic body 200 is molded directly on the film insert 100.

It should be noted that heat and pressure generated during the injection molding may cause the plastic material in the main part of the cavity C and/or the first main face 110 of the film insert 100 to melt into each other or melt independently, the plastic material in the or each first recess 12 and/or a part or the whole of the corresponding side face 130 of the film insert 100 to melt into each other or melt independently, and the plastic material in the or each second recess 13 and/or a part or the whole of the corresponding end portion of the second main face 120 of the film insert 100 to melt into each other or melt independently. If so, when the plastic material cools and solidifies, the plastic material in the main part of the cavity C is fused with or bonded to the first main face 110 of the film insert 100, the plastic material in the or each first recess 12 is thermally fused or bonded to a part or the whole of the corresponding side face 130 of the film insert 100, and the plastic material in the or each second recess 13 is thermally fused or bonded to a part or the whole of the corresponding end portion of the second main face 120 of the film insert 100. Thus each portion of the molded plastic body 200 may be more firmly fixed to the film insert 100.

If the first mold 10 has the plurality of abutting portions 14, the molding method may include the following steps. Step a): when the second main face 120 of the film insert 100 is placed directly on the support face 11 of the first mold 10, the parts other than the exposed portions 121 of an end portion of the second main face 120 of the film insert 100 face the respective second recess 13 of the first mold 10, and the abutting portions 14 are brought into abutment with the respective exposed portions 121 of the second main face 120 of the film insert 100. Step b): when the plastic material is injected into the cavity C, the plastic material partly flows through the at least one first recess 12 into the plurality of second recesses 13 at the side of the end portion of the second main face 120. At this time, the flow of the plastic material (see the arrows in Fig. 3) exerts a force on the end portion of the film insert 100 in the direction of the arrows in Fig. 3. However, the abutting portions 14 support the exposed portions 121 of the second main face 120 of the film insert 100 so as to provide resistance against the forces to move the end portion of the film insert 100 toward the second recesses 13. If the exposed portions 121 are provided in each of a plurality of end portions of the second main face 120 of the film insert 100, Steps a) and b) above are performed in each of such end portions. Also, if the abutting portions 14 are omitted, the resistance against the above forces may also be provided by adjusting various conditions, such as the amount and/or directions of the injected plastic material. In this aspect of the molding method, when the plastic material cools and solidifies, the part of the plastic material in the plurality of second recesses 13 becomes the second fixing portions 222, which are fixed directly to the parts other than the exposed portions 121 of the at least one end portion of the second main face 120 of the film insert 100.

The molded article M1 and the molding method of the above various aspects have at least the following technical features. Firstly, the possibility is reduced that the film insert 100 is peeled away from the molded plastic body 200 for the following reasons. The main body 210 of the molded plastic body 200 is fixed directly onto the first main face 110 of the film insert 100. The or each fixing portion 220 has a cross section in the Z-Z' direction of generally inverted L-shape, and the at least one first fixing portion 221 thereof extends from the main body 210 along the corresponding side face 130 of the film insert 100 and is fixed directly to a part or the whole of the side face 130. The at least one second fixing portion 222 of the or each fixing portion 220 extends from the corresponding first fixing portion 221 along the second main face 120 of the film insert 100 and is fixed directly to a part or the whole of the corresponding end portion of the second main face 120. Such fixing structure allows holding of the end portion(s) of the film insert 100 directly between the main body 210 and the at least one second fixing portion 222, reducing the possibility that the film insert 100 is peeled away from the molded plastic body 200. Also, if the film insert 100 includes a plurality of the plastic material films, the above fixing structure also reduces the possibility that each two adjacent plastic material films of the film insert 100 are peeled away from each other. Moreover, if the film insert 100 is constituted by a plurality of plastic material films, and if the at least one first fixing portion 221 at least partly cover the at least one side face 130 of the film insert 100, moisture hardly enters between the plastic material films of the film insert 100 from the at least one side face 130 of the film insert 100. This reduces the possibility of deterioration of the adhesive between the plastic material films due to the ingress of moisture.

Secondly, the molded article M1 is manufacturable at a reduced cost for the following reasons. As discussed above, the film insert 100 is flat in shape, and the end portions thereof are not bent. The or each first fixing portion 221 extends from the main body 210 along the corresponding side face 130 of the film insert 100, and the or each second fixing portion 222 extends from the corresponding first fixing portion 221 along the second main face 120 of the film insert 100. Such arrangement obviates the necessity to subject the film insert to a bending process such as a preforming process for the purpose of preventing peeling between the film insert and the molded plastic body as in the conventional example.

Thirdly, the molded article M1 is improved in production yield if the second main face 120 of the film insert 100 is provided with a plurality of the exposed portions 121. Particularly, when the molded plastic body 200 is molded on the first main face 110 of the film insert 100, the exposed portions 121 of the second main face 120 of the film insert 100 are supported by the respective abutting portions 14 of the first mold 10. This arrangement reduces the possibility that the flow of the plastic material injected into the cavity C moves the or each end portion of the film insert 100 toward the corresponding second recesses 13 of the first mold 10 and causes deformation of the or each end portion of the film insert 100.

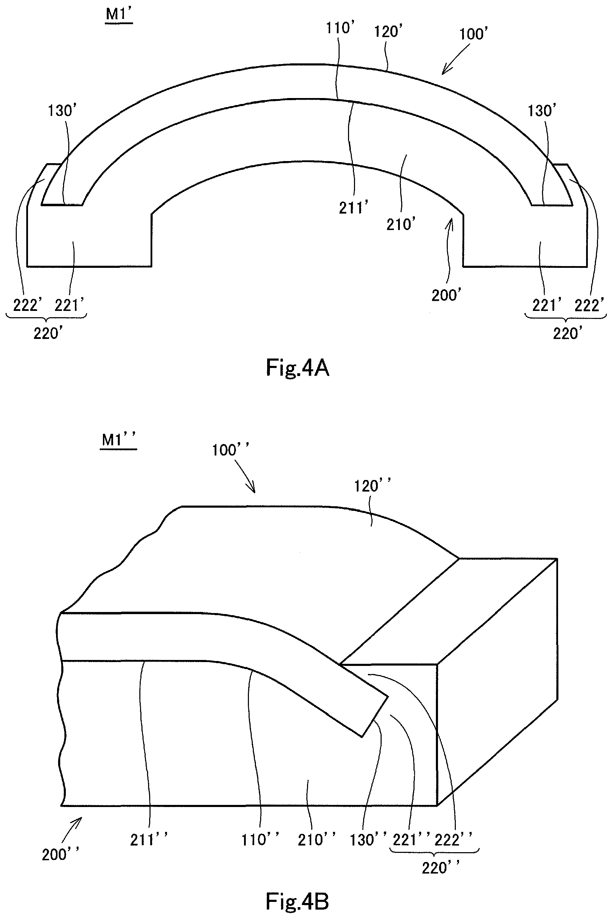

It should be appreciated that the film insert 100 of any of the above aspects may not be flat in shape, i.e. may be partly curved, bent, and/or uneven. In such a variant molded article, the fixing face 211 of the main body 210 has a shape conforming to the shape of the first main face 110 of the film insert 100, and otherwise the molded plastic body 200 of the variant has the same configuration as the molded plastic body 200 described above. Some example variants with the film insert at least partly curved are shown in Figs. 4A to 4D.

Fig. 4A shows a variant film insert molded article M1 having a film insert 100' that is curved in entirety such as to have a curved surface. In this variant, the film insert 100' has the same configuration as the above film insert 100, except for the following points. The film insert 100' has a first main face 110' and a second main face 120', each of which is curved to form a curved shape. The film insert 100' have at least one side face 130' extending from the first main face 110' to the second main face 120'. The molded plastic body 200' has the same configuration as the molded plastic body 200 described above, except that the fixing face 211' of the main body 210' is curved such as to form a curved surface extending along the first main face 110' of the film insert 100'. The molded plastic body 200' includes at least one fixing portion 220', which or each of which has a cross section in the Z-Z' direction of generally inverted L-shape and has at least one first fixing portion 221' and at least one second fixing portion 222'.

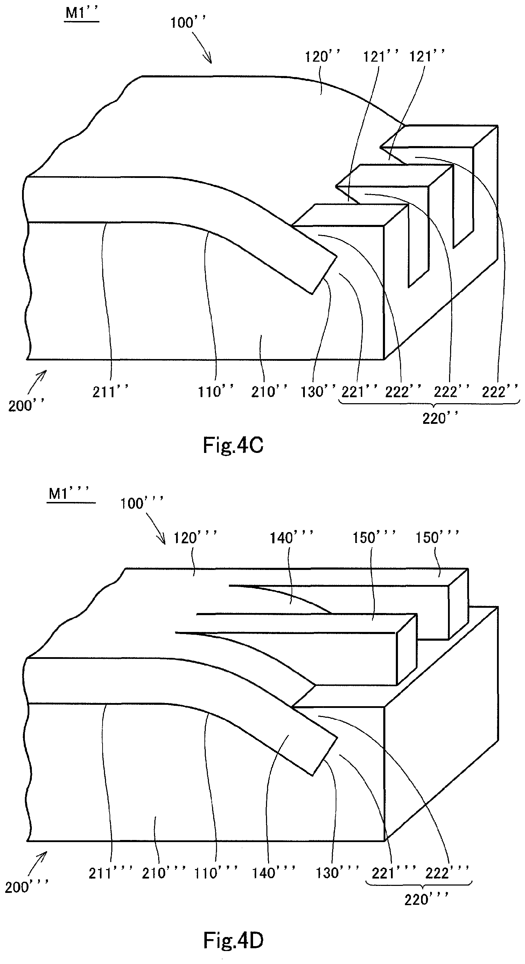

Fig. 4B or 4C each show another variant film insert molded article M1" having a film insert 100" with at least one end portion curved such as to have a curved surface. In this case, the film insert 100" has the same configuration as the film insert 100 described above, except for the following points. The film insert 100" has a first main face 110", at least one end portion of which is curved such as to form a curved surface, and a second main face 120", at least one end portion of which is curved such as to form a curved surface. The film insert 100" has at least one side face 130" extending from the first main face 110" to the second main face 120". The molded plastic body 200" has the same configuration as the molded plastic body 200 described above, except that at least one end portion of the fixing face 211" of the main body 210" is curved such that the or each one end portion forms a curved surface extending along the corresponding one end portion of the first main face 110" of the film insert 100". In the variant of Fig. 4B, the molded plastic body 200" includes at least one fixing portion 220", which or each of which has a cross section in the Z-Z' direction of generally inverted L-shape and includes one first fixing portion 221" and one second fixing portion 222". In the variant of Fig. 4C, the molded plastic body 200" includes at least one fixing portion 220", which or each of which has a cross section in the Z-Z' direction of generally inverted L-shape and includes one first fixing portion 221" and a plurality of second fixing portions 222". The second main face 120" of the film insert 100" has exposed portions 121" exposed from between the corresponding second fixing portions 222".

Fig. 4D shows still another variant film insert molded article M1"', in which at least one end portion of the film insert 100'" includes at least one first portion 140'" and at least one second portion 150"'. In this variant, the film insert 100"' has the same configuration as the film insert 100 described above, except for the following points. The or each boundary between adjacent first and second portions 140"', 150'" is cut through. The or each first portion 140"'may be curved toward the Z' direction such as to have a curved surface or may be bent. The or each second portion 150'" may be of any shape and may extend in a planar direction of the central portion of the film insert 100". The molded plastic body 200"' has the same configuration as the molded plastic body 200 described above, except that that the fixing face 211'" of the main body 210'" is fixed directly to a region (a region other than the second portion(s) 150'") of the first main face 110'" of the film insert 100"', and that the fixing face 211'" is curved partly such as to form a curved surface extending along the at least one first portion 140"' of the first main face 110"'. The molded plastic body 200"' includes at least one fixing portion 220'", which or each of which has a cross section in the Z-Z' direction of generally inverted L-shape and includes at least one first fixing portion 221'" and at least one second fixing portion 222"'. The or each first fixing portion 221'" is fixed directly to the corresponding region of the side face 130'" of the film insert 100"'that exclude the second portion(s) 150"'. The or each second fixing portion 222"' is fixed directly to the corresponding region (the region other than the second portion(s) 150"') of the second main face 120'" of the film insert 100'"

In a variant molded article having a film insert at least partly (or entirely) curved, bent and/or uneven, the film insert may preferably be subjected to a shaping process before performing the film insert molding method described above. This shaping includes heating and thereby softening the film insert and subjecting the film insert 100 to vacuum molding, pressure molding, or press molding using a mold (not shown). This deforms the film insert into a desired shape conforming to the mold. Thereafter, onto the film insert of desired shape the plastic material is molded by the above molding method. In this case, the support face 11 of the first mold 10 has a shape conforming to the shape of the film insert, and otherwise the first and second molds 10, 20 may have similar configurations to those described above. It should be appreciated that the variant molded article having a film insert shaped in this manner also has the first and third technical features described above. In addition, although the film insert is shaped and is no longer flat, there is still no need to subject the film insert to a bending process such as a preforming process for the purpose of preventing peeling between the film insert and the molded plastic body as in the conventional example. Therefore, the variant molded article also has a feature equivalent to the above second technical feature.

It should be noted that the first recess 12 and the second recess 13 need not be provided in the first mold 10, but may be provided in either of the first and second molds as long as the recesses 12 and 13 form part of the cavity C. The abutting portion 14 also is only required to be provided in the cavity of the first and second molds.

### Second embodiment

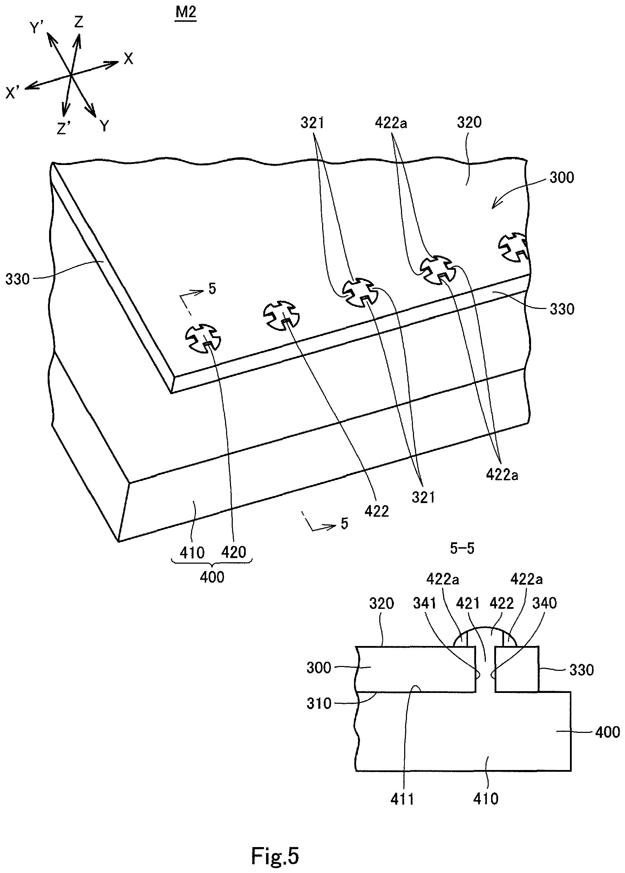

The following is a description, with reference to Figs. 5 to 8, of a film insert molded article M2 (which may be hereinafter referred to simply as a "molded article M2") according to a plurality of embodiments including the second embodiment of the invention. The molded article M2 includes a film insert 300 and a molded plastic body 400. It should be appreciated that the Z-Z' direction shown in Figs. 5 to 8 is the thickness direction of the film insert 300. The Y-Y' direction shown in Figs. 5 to 8 is orthogonal to the Z-Z' direction. The X-X' direction shown in Fig. 5 is orthogonal to the Z-Z' and Y-Y' directions.

The film insert 300 may have the same configuration as the film insert 100 described above, except for the provision of at least one through hole 340. Accordingly the film insert 300 may be a capacitive touch sensor and may have any one of the structures A) to D) described above. Alternatively, the film insert 300 may be constituted by two plastic films bonded together and a sensor held therebetween, and the sensor may be of type other than a capacitive touch type (e.g., a resistive touch sensor, a gyro sensor, etc.), a piezoelectric device, a photodiode, or other device. The film insert moulded article may be mounted to or in, or form part of, a larger electronic device.

The at least one through hole 340 extends through the film insert 300, i.e. from the first main face 310 to the second main face 320 of the film insert 300. The or each through hole 340 has a wall 341.

If a plurality of the through holes 340 is provided, the through holes 340 may have, for example, any of the following configurations. Configuration 1): each through hole 340 is an elongated hole in a corresponding end portion of the film insert 300 of polygonal shape and extend in the longitudinal direction of the corresponding end portion. For example, if two through holes 340 are provided, they may be elongated holes respectively extending longitudinally along Y- and Y'-direction-side end portions, or along X- and X'-direction-side end portions, of the film insert 300 of rectangular shape. Configuration 2): the through holes 340 are arc-shaped or elongated holes arranged at spaced intervals in and along the at least one end portion of the film insert 300. In this case, the or each end portion of the film insert 300 is provided with a plurality of through holes 340. Configuration 3): the through holes 340 are short holes arranged at spaced intervals in and along the at least one end portion of the film insert 300. Also in this case, the or each end portion of the film insert 300 is provided with a plurality of through holes 340. Configuration 4): the through holes 340 are holes of any shape arranged at a plurality of any desired positions (e.g., at corners) of the film insert 300.

The molded plastic body 400 is molded directly on the first main face 310 of the film insert 300. The molded plastic body 400 includes a main body 410 and at least one fixing portion 420. The main body 410 is fixed directly to (in intimate contact with) the first main face 310 of the film insert 300. The main body 410 has a fixing face 411 fixed directly to (in intimate contact with) the first main face 310 of the film insert 300. The fixing face 411 is a flat face. The or each fixing portion 420 has a cross section in the Z-Z' direction of generally T-shape or of generally inverted L-shape. The or each fixing portion 420 includes at least one third fixing portion 421 and at least one fourth fixing portion 422.

The or each third fixing portion 421 extends from the main body 410 along the corresponding through hole 340 of the film insert 300 and is fixed directly to (in intimate contact with) the wall 341 of the through hole 340. The or each third fixing portion 421 has an outer shape conforming to the shape of the corresponding through hole 340. In other words, the or each third fixing portion 421 fills the corresponding through hole 340.

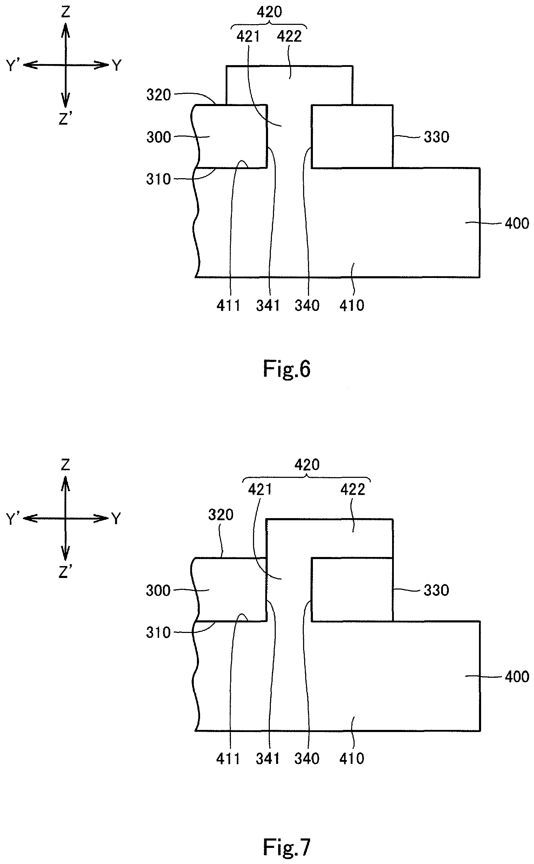

The or each fourth fixing portion 422 extends from the corresponding third fixing portion 421 along the second main face 320 of the film insert 300 and is fixed directly to (in intimate contact with) the rim of the through hole 340 on the second main face 320. If the or each fixing portion 420 has a cross section of generally T-shape, the or each fourth fixing portion 422 thereof may have a dome shape (see Fig. 5), a column shape, a lateral semi-column shaped, or a polygonal plate shape (see Fig. 6). The or each fourth fixing portion 422 of dome shape or column shape has an outer diameter larger than the outer dimensions of the corresponding third fixing portion 421. The or each fourth fixing portion 422 of lateral semi-column shape or polygonal plate shape has outer dimensions larger than those of the third fixing portion 421. If the or each fixing portion 420 has a cross section of generally inverted L-shape, the or each fourth fixing portion 422 may be of a plate shape extending in a direction from the corresponding third fixing portion 421 along the second main face 320 (see Fig. 7).

If a single fixing portion 420 is provided, the fixing portion 420 includes a single third fixing portion 421 and one or a plurality of fourth fixing portions 422. That is, the single fourth fixing portion 422, or the plurality of fourth fixing portions 422, may extend from the single third fixing portion 421 along the second main face 320.

A plurality of the fixing portions 420 may be provided in one of the following arrangements, for example. If the through holes 340 of the film insert 300 have Configuration 1) described above, each fixing portion 420 includes one third fixing portion 421 and one or a plurality of fourth fixing portions 422. Each of the third fixing portions 421 of the fixing portions 420 may be an elongated block extending from the main body 410 along the corresponding through hole 340 such as to fill the through hole 340. In this case, from each third fixing portion 421, a fourth fixing portion 422, or a plurality of fourth fixing portions 422, may extend along the second main face 320.

If the through holes 340 of the film insert 300 have Configuration 2) described above, each fixing portion 420 includes one third fixing portion 421 and one or a plurality of fourth fixing portions 422. Each of the third fixing portions 421 of the fixing portions 420 may be an arc-shaped or elongated block extending from the main body 410 along the corresponding through hole 340 such as to fill the through hole 340. In this case, from each third fixing portion 421 a fourth fixing portion 422, or a plurality of fourth fixing portion 422, may extend along the second main face 320.

If the through holes 340 of the film insert 300 have Configuration 3) or 4) described above, each fixing portion 420 includes one third fixing portion 421 and one fourth fixing portions 422. Each of the third fixing portions 421 of the fixing portions 420 may be a block extending from the main body 410 along the corresponding through hole 340 such as to fill the through hole 340. In this case, in each fixing portion 420, the single fourth fixing portion 422 extends from the single third fixing portion 421 along the second main face 320.

The or each fourth fixing portion 422 may be shaped such as to partly expose the rim of the corresponding through hole 340, or the area of the second main face 320 of the film insert 300 which is adjacent to the rim. For example, the or each fixing portion 420, if having has a cross section of generally T-shape, may have the following configuration 1) or 2). Configuration 1): the or each fourth fixing portion 422 is provided with at least one cut-out 422a for partly exposing the rim of the corresponding through hole 340, or the adjacent area of the second main face 320. Configuration 2): the or each fourth fixing portion 422 is fixed in the longitudinal direction thereof directly to the rim of the corresponding through hole 340 on the second main face 320, while in the widthwise direction of the fourth fixing portion 422 the rim of the corresponding through hole 340 of the second main face 320 is exposed. Alternatively, if having a cross section of generally inverted L-shape, the or each fixing portion 420 may have the above Configuration 1) or the following Configuration 3). Configuration 3): the or each fourth fixing portion 422 is fixed to a part or parts of the area surrounding the rim of the corresponding through hole 340 on the second main face 320 of the film insert 300, and the remaining part or parts of the rim is exposed. This remaining part or parts of the area surrounding the rim of the or each through hole 340 on the second main face 320 of the film insert 300 will be hereinafter referred to as an exposed portion or portions 321.

The or each fixing portion 420 may further include at least one first fixing portion 423. The or each first fixing portion 423 extends in the Z-Z' direction from the main body 410 along the corresponding side face 330 of the film insert 300 and is fixed directly to a part or the whole of the side face 330 of the film insert 300. The or each first fixing portion 423 may have the same configuration as the or each first fixing portion 221.

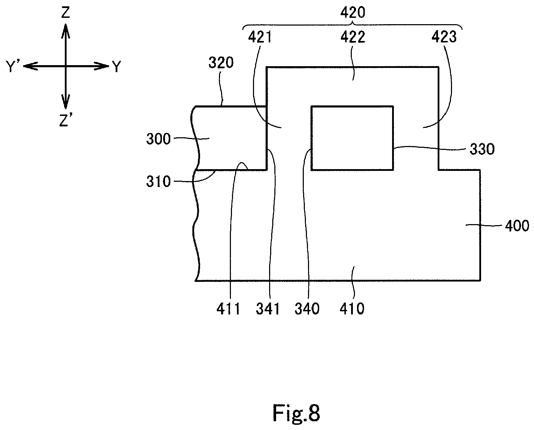

If the or each fixing portion 420 further includes the at least one first fixing portion 423, as shown in Fig. 8, the or each fourth fixing portion 422 may be fixed directly to the second main face 320 of the film insert 300 and interconnect at least one third fixing portion 421 and at least one first fixing portion 423. More particularly, the or each fixing portion 420 may include a single first fixing portion 423, a single third fixing portion 421, and a single fourth fixing portion 422 interconnecting the first fixing portion 423 and the third fixing portion 421. Alternatively, the or each fixing portion 420 may include a single first fixing portion 423, a single third fixing portion 421, and a plurality of fourth fixing portions 422 interconnecting the first fixing portion 423 and the third fixing portion 421.

The film insert 300 and the molded plastic body 400 may be made of materials compatible with and/or weldable to each other. In this case, the film insert 300 and the molded plastic body 400 may preferably be, but are not required to be, made of the same kind of plastic materials, the same plastic material, polymer alloys containing the same kind of plastic materials, or polymer alloys containing the same plastic material. The film insert 300 and the molded plastic body 400 may be fixed to each other more firmly by any of the following means. The main body 410 may be directly fused with or directly welded to the first main face 310 of the film insert 300. The or each third fixing portion 421 may be directly fused with or directly welded to the wall 341 of the corresponding through hole 340 of the film insert 300. The or each fourth fixing portion 422 may be directly fused with or directly welded to the rim of the corresponding through hole 340 on the second main face 320 of the film insert 300. If the or each fixing portion 420 further includes the at least one first fixing portion 423, the or each first fixing portion 423 may be directly fused with or directly welded to a part or the whole of the corresponding side face 330 of the film insert 300.

The following discussion is directed to third and fourth molds (not shown) to be used for a film insert molding method of the molded article M2 of any of the above aspects. The third and fourth molds as combined provide a cavity of a shape conforming to the outer shape of the molded article M2 (the combination of the film insert 300 and the main body 410). The third mold includes a support face and at least one bottomed hole. The support face may be brought into surface contact with the second main face 320 of the film insert 300 when the film insert 300 is placed into the cavity.

The at least one bottomed hole is provided in the support face such that when the film insert 300 is in surface contact with the support face, the or each bottomed hole communicates with the corresponding through hole 340 of the film insert 300. The or each bottomed hole conforms to the outer shape of the corresponding fourth fixing portion 422 of any of the above aspects and opens to the support face. If a plurality of the fourth fixing portions 422 are provided, a plurality of the bottomed holes is accordingly provided. In this case, the bottomed holes are disposed at respective positions corresponding to the fourth fixing portions 422.

If the or each fixing portion 420 of the molded plastic body 400 further includes the at least one first fixing portion 423, the third mold further has at least one recess. The or each recess in the third mold extends in the Z-Z' direction along a part or the whole of the corresponding side face 330 of the film insert 300 when the film insert 300 is in surface contact with the support face. The or each recess conforms to the outer shape of the first fixing portion 423 of any of the above aspects, and communicates with the corresponding bottomed hole. The or each recess opens in the Z' direction and also opens to the corresponding side face 330 of the film insert 300 when the film insert 300 is in surface contact with the support face. The at least one recess may be opposed to the side face 330 of the film insert 300 when the film insert 300 is in surface contact with the support face.

The molding method will be hereinafter described. The flat film insert 300 is prepared. Thereafter, the second main face 320 of the film insert 300 is directly placed on the support face of the third mold. At this time, the or each through hole 340 of the film insert 300 communicates with the corresponding bottomed hole of the third mold.

Thereafter, the third and fourth molds are closed together. The film insert 300 is thus disposed in the cavity of the third and fourth molds. Thereafter, plastic material is injected onto the first main face 310 of the film insert 300 in the cavity. As a result, the plastic material fills the cavity and partly flows into the at least one through hole 340 of the film insert 300 and the at least one bottomed hole of the third mold.

Thereafter, the plastic material filling the cavity, the at least one through hole 340, and the at least one bottomed hole cools and solidifies. The solidified plastic material becomes the molded plastic body 400. Specifically, of the solidified plastic material, the plastic material in the cavity becomes the main body 410, which is fixed directly to the first main face 310 of the film insert 300; the plastic material in the at least one through hole 340 becomes the at least one third fixing portion 421, which or each of which is fixed directly to the wall 341 of the corresponding through hole 340; the plastic material in the at least one bottomed hole becomes the at least one fourth fixing portion 422, which or each of which is fixed directly to the rim of corresponding through hole 340 on the second main face 320 of the film insert 300. The next step is to open the third and fourth molds to remove therefrom the film insert 300 and the molded plastic body 400. Thus the molded plastic body 400 is molded directly on the film insert 300.

If the second main face 320 of the film insert 300 includes the at least one exposed portion 321, the molding method may include the following steps. When the second main face 320 of the film insert 300 is directly placed on the support face of the third mold, the at least one exposed portion 321 of the second main face 320 of the film insert 300 is also brought into abutment with the support face. When the plastic material is injected into the cavity, the plastic material partly flows through the at least one through hole 340 into the at least one bottomed hole. At this time, the flow of the plastic material exert forces on the rim of the at least one through hole 340 of the film insert 300 in directions toward the at least one bottomed hole. However, the support face supports the at least one exposed portion 321 of the second main face 320 of the film insert 300 so as to provide resistance against the forces to move the rim of the at least one through hole 340 on the second main face 320 of the film insert 300 toward the at least one bottomed hole. If the second main face 320 does not have any exposed portions 321, the resistance against the above forces may also be provided by adjusting various conditions, such as the amount and/or directions of the injected plastic material.

If the third mold has the at least one recess, the molding method may include the following steps. When the second main face 320 of the film insert 300 is placed on the support face of the third mold, a part or the whole of the or each side face 330 of the film insert 300 faces the corresponding recess of the third mold. When the plastic material is injected onto the first main face 310 of the film insert 300 in the cavity, the plastic material partly flows also into the at least one recess. At this time, the plastic material in the at least one recess becomes integrated with the plastic material in the at least one bottomed hole, in which state the plastic material cools and solidifies, so that the plastic material in the at least one recess becomes the at least one first fixing portion 423, which or each of which is fixed directly to a part or the whole of the corresponding side face 330 of the film insert 300.

It should be noted that heat and pressure generated during the injection molding may cause the plastic material in the cavity and/or the first main face 310 of the film insert 300 to melt into each other or melt independently, the plastic material in the or each through hole 340 and/or the wall 341 of the corresponding through hole 340 of the film insert 300 to melt into each other or melt independently, and the plastic material in the or each bottomed hole and/or the rim of the corresponding through hole 340 on the second main face 320 of the film insert 300 to melt into each other or melt independently. If so, when the plastic material cools and solidifies, the plastic material in the cavity is fused with or bonded to the first main face 310 of the film insert 300, the plastic material in the or each through hole 340 is fused with or bonded to the wall 341 of the corresponding through hole 340 of the film insert 300, and the plastic material in the or each bottomed hole is fused with or bonded to the rim of the corresponding through hole 340 on the second main face 320 of the film insert 300. If the third mold has at least one recess, the plastic material in the or each recess is fused with or bonded to a part or the whole of the corresponding side face 330 of the film insert 300 in a similar manner. Thus each portion of the molded plastic body 400 may be more firmly fixed to the film insert 300.

The molded article M2 and the molding method of the above various aspects have at least the following technical features. Firstly, the possibility is reduced that the film insert 300 is peeled away from the molded plastic body 400 for the following reasons. The main body 410 of the molded plastic body 400 is fixed directly onto the first main face 310 of the film insert 300. The third fixing portion 421 of the or each fixing portion 420 is fixed directly to the wall 341 of the corresponding through hole 340 of the film insert 300, and the at least one fourth fixing portion 422 of the or each fixing portion 420 is fixed directly to the rim of the corresponding through hole 340 on the second main face 320 of the film insert 300. Such fixing structure allows holding of the film insert 300 directly between the main body 410 and the at least one fourth fixing portion 422, reducing the possibility that the film insert 300 is peeled away from the molded plastic body 400. Also, if the film insert 300 includes a plurality of plastic material films, the above fixing structure also reduces the possibility that each two adjacent plastic material films of the film insert 300 are peeled away from each other. Moreover, if the film insert 300 is constituted by a plurality of the plastic material films, and if the at least one first fixing portion 423 at least partly cover the at least one side face 330 of the film insert 300, moisture hardly enters between the plastic material films of the film insert 300 from the at least one side face 130 of the film insert 300. This reduces the possibility of deterioration of the adhesive between the plastic material films due to the ingress of moisture.

Secondly, the molded article M2 is manufacturable at a reduced cost for the following reasons. As discussed above, the film insert 300 is flat in shape, and the end portions thereof are not bent. The or each third fixing portion 421 extends from the main body 410 along the corresponding through hole 340 of the film insert 300, and the or each fourth fixing portion 422 extends from the corresponding third fixing portion 421 along the second main face 320 of the film insert 300. Such arrangement obviates the necessity to subject the film insert to a bending process such as a preforming process for the purpose of preventing peeling between the film insert and the molded plastic body as in the conventional example.

Thirdly, the molded article M2 is improved in production yield if the second main face 320 of the film insert 300 is provided with the at least one exposed portion 321. Particularly, when the molded plastic body 400 is molded on the first main face 310 of the film insert 300, the at least exposed portion 321 of the second main face 320 of the film insert 300 is supported by the support face of the third mold. This arrangement reduces the possibility that the flow of the plastic material moves the rim of the at least one through hole 340 of the film insert 300 toward the at least one bottomed hole of the third mold and thereby and causes deformation of the rim.

It should be appreciated that the film insert 300 of any of the above aspects may not be flat in shape, i.e. may be partly curved, bent, and/or uneven. The film insert 300 may of course be curved in entirety such as to have a curved surface as in the film insert 100' (see Fig. 3 for expediency). In this case, the fixing face 411 of the main body 410 of the molded plastic body 400 is curved such as to form a curved surface extending along the first main face 310 of the film insert 300. Otherwise the molded plastic body 400 is configured as described above.

In a variant molded article having a film insert of non-flat shape, the film insert may preferably be subjected to a shaping process as described above. Thereafter, onto the film insert of desired shape the plastic material is molded by the above molding method. In this case, the support face of the third mold has a shape conforming to the shape of the film insert, and otherwise the third and fourth molds may have similar configurations to those described above. It should be appreciated that the variant molded article having a film insert shaped in this manner also has the first and third technical features described above. In addition, although the film insert is shaped and is no longer flat, there is still no need to subject the film insert to a bending process such as a preforming process for the purpose of preventing peeling between the film insert and the molded plastic body as in the conventional example. Therefore, the variant molded article also has a feature equivalent to the above second technical feature.

### Third embodiment

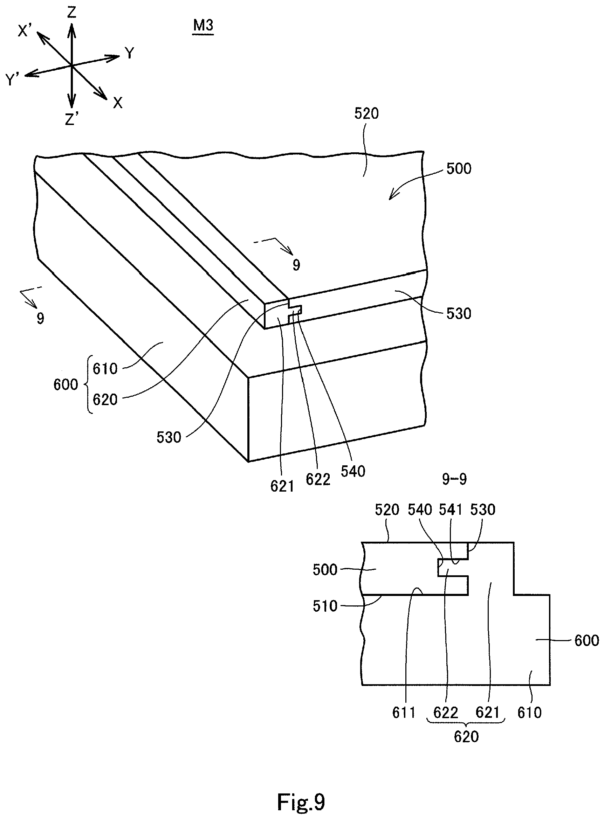

The following is a description, with reference to Fig. 9, of a film insert molded article M3 (which may be hereinafter referred to simply as a "molded article M3") according to a plurality of embodiments including the third embodiment of the invention. The molded article M3 includes a film insert 500 and a molded plastic body 600. It should be noted that the Z-Z' direction shown in Fig. 9 is the thickness direction of the film insert 500. The Y-Y' direction shown in Fig. 9 is orthogonal to the Z-Z' direction. The X-X' direction shown in Fig. 9 is orthogonal to the Z-Z' and Y-Y' directions.

The film insert 500 may have the same configuration as the above film insert 100, except for the provision of at least one lateral hole or groove 540. Accordingly the film insert 500 may be a capacitive touch sensor and may have any one of the configurations A) to D) described above. Alternatively, the film insert 500 may be constituted by two plastic films bonded together and a sensor held therebetween, and the sensor may be of type other than a capacitive touch type (e.g., a resistive touch sensor, a gyro sensor, etc.), a piezoelectric device, a photodiode, or other device. The film insert moulded article may be mounted to or in, or form part of, a larger electronic device.

The or each lateral hole or groove 540 extends from a corresponding side face 530 of the film insert 500, in a direction crossing the Z-Z' direction. As shown in Fig. 9, the or each lateral hole 540 may extend from the corresponding side face 530 in a direction orthogonal to the Z-Z' direction (in Y direction in Fig. 9). The or each lateral hole 540 opens to the corresponding side face 530 and has a wall 541. The or each lateral hole 540 may open to the corresponding side face 530 and also to the first main face 510 or the second main face 520 of the film insert 500.

If a plurality of the lateral holes 540 is provided, the lateral holes 540 may have, for example, any of the following configurations 1) to 4). Configuration 1): each lateral hole 540 is an elongated hole or groove in a corresponding side face 530 of the film insert 500 of polygonal shape and extends in the longitudinal direction of the corresponding side face 530. For example, if two lateral holes 540 are provided, they may be elongated holes extending longitudinally along Y- and Y'-direction-side side faces 530, or along X- and X'-direction-side side faces 530, of the film insert 500 of rectangular shape. Configuration 2): the lateral holes 540 are arc-shaped or elongated holes arranged at spaced intervals in and along the at least one side face 530 of the film insert 500. In this case, the or each side face 530 of the film insert 500 is provided with a plurality of lateral holes 540. Configuration 3): the lateral holes 540 are short holes arranged at spaced intervals in and along the at least one side face 530 of the film insert 500. Also in this case, the or each side face 530 of the film insert 500 is provided with a plurality of lateral holes 540. Configuration 4): the lateral holes 540 are holes of any shape arranged at a plurality of any desired positions (e.g., at corners) of the film insert 500.

The molded plastic body 600 is molded directly on the first main face 510 of the film insert 500. The molded plastic body 600 includes a main body 610 and at least one fixing portion 620. The main body 610 is fixed directly to (in intimate contact with) the first main face 510 of the film insert 500. The main body 610 has a fixing face 611 fixed directly to (in intimate contact with) the first main face 510 of the film insert 500. The fixing face 611 is a flat face. The or each fixing portion 620 has a cross section in the Z-Z' direction of generally lateral T-shape or of generally inverted L-shape. The or each fixing portion 620 includes at least one fifth fixing portion 621 and at least one sixth fixing portion 622.

The or each fifth fixing portion 621 extends from the main body 610 along a part or the whole of the corresponding side face 530 of the film insert 500 and is fixed directly to (in intimate contact with) the part or whole of the side face 530.

The or each sixth fixing portion 622 extends from the corresponding fifth fixing portion 621 along the corresponding lateral hole 540 of the film insert 500 and is fixed directly to (in intimate contact with) the wall 541 of the lateral hole 540. The or each sixth fixing portion 622 has an outer shape conforming to the shape of the lateral hole 540. In other words, the or each sixth fixing portion 622 fills the corresponding lateral hole 540. If the or each fixing portion 620 has a cross section of generally lateral T-shape (see Fig. 9), the or each sixth fixing portion 622 extends centrally from the fifth fixing portion 621 along the corresponding lateral hole 540. If the or each fixing portion 620 has a cross section of generally inverted L-shape, the or each sixth fixing portion 622 extends from the Z- or Z'-direction-side end of the corresponding fifth fixing portion 621 along the corresponding lateral hole 540.

If a single fixing portion 620 is provided, the fixing portion 620 has a single fifth fixing portion 621 and at least one sixth fixing portion 622. The fifth fixing portion 621 may have the same configuration as the first fixing portion 221 of the single fixing portion 220. For the single fifth fixing portion 621, one or a plurality of sixth fixing portions 622 may be provided. In the former case, the lateral hole 540 is a single loop-shaped hole, and the sixth fixing portion 622 may preferably be an loop-shaped flange. In the latter case, a plurality of lateral holes 540 is provided having any one of the above structures 1 to 4), and the sixth fixing portions 622 are flanges extending from the fifth fixing portion 621 along the respective lateral holes 540 of the film insert 500, filling the respective lateral holes 540, and being fixed directly to the walls 541 of the respective lateral holes 540.

If a plurality of the fixing portions 620 is provided, the fixing portions may have either of the following structures 5) and 6). Configuration 5): if the lateral holes 540 of the film insert 500 have Configuration 1) described above, each fixing portion 620 includes a single fifth fixing portion 621 and a single sixth fixing portion 622. The fifth fixing portion 621 of each fixing portion 620 is an elongated block extending from the main body 610 along the corresponding side face 530 of the film insert 500 of polygonal shape in the Z-Z' direction and also in the longitudinal direction of the side face 530, and it is fixed directly to the whole of the side face 530. The sixth fixing portion 622 of each fixing portion 620 is a flange extending from the corresponding fifth fixing portion 621 along the corresponding lateral hole 540 of the film insert 500, and it fills the lateral hole 540 and is fixed directly to the wall 541 of the lateral hole 540. If two fixing portion 620 are provided, the fifth fixing portions 621 of the two fixing portions 620 may be elongated blocks fixed directly to the respective wholes of the Y- and Y'-direction-side side faces 530 of the film insert 500 of rectangular shape. Alternatively, the fifth fixing portions 621 of the two fixing portions 620 may be elongated blocks fixed directly to the respective wholes of the X- and X'-direction-side side faces 530 of the film insert 500 of rectangular shape.

Configuration 6): if the lateral holes 540 of the film insert 500 have any of Configurations 2) to 4) described above, each fixing portion 620 may include a single fifth fixing portion 621 and a plurality of sixth fixing portions 622. In this case, the fifth fixing portion 621 of each fixing portion 620 is an elongated block extending from the main body 610 along the corresponding side face 530 of the film insert 500 in the Z-Z' direction and also in the longitudinal direction of the side face 530, and it is fixed directly to a part or the whole of the side face 530. The sixth fixing portions 622 of each fixing portion 620 are flanges extending from the corresponding fifth fixing portion 621 along the respective lateral holes 540 in the at least one side face 530 and fill the respective lateral holes 540, and they are fixed directly to the respective walls 541 of the lateral holes 540. Alternatively, each fixing portion 620 may include a single fifth fixing portion 621 and a single sixth fixing portion 622. In this case, the fifth fixing portion 621 of each fixing portion 620 is a block extending from the main body 610 along the corresponding side face 530 of the film insert 500 in the Z-Z' direction such as to be arranged at spaced intervals along the side face 530, and it is fixed directly to a part of the corresponding side face 530. In this case, the sixth fixing portion 622 of each fixing portion 620 is a flange extending from the corresponding fifth fixing portion 621 along the corresponding lateral hole 540 of the film insert 500 and filling in the lateral hole 540, and it fixed directly to the wall 541 of the corresponding lateral hole 540.

The film insert 500 and the molded plastic body 600 may be made of materials compatible with and/or weldable to each other. In this case, the film insert 500 and the molded plastic body 600 may preferably be, but are not required to be, made of the same kind of plastic materials, the same plastic material, polymer alloys containing the same kind of plastic materials, or polymer alloys containing the same plastic material. The film insert 500 and the molded plastic body 600 may be fixed to each other more firmly by any of the following means. The main body 610 may be directly fused with or directly welded to the first main face 510 of the film insert 500. The or each fifth fixing portion 621 may be directly fused with or directly welded to a part or the whole of the corresponding side face 530 of the film insert 500. The or each sixth fixing portion 622 may be directly fused with or directly welded to the wall 541 of the corresponding lateral hole 540 of the film insert 500.

The following discussion is directed to fifth and sixth molds (not shown) to be used for a film insert molding method of the molded article M3 of any of the above aspects. The fifth and sixth molds as combined provide a cavity of a shape conforming to the outer shape of the molded article M3. The fifth mold has a support face and at least one recess. The support face may be brought into surface contact with the second main face 520 of the film insert 500 when the film insert 500 is placed into the cavity. The cavity includes at least one recess. The part of the cavity other than the recess will be referred to as a main part of the cavity. The main part is of a shape conforming to the outer shape of the combination of the film insert 500 and the main body 610.

The at least one recess of the fifth mold extends along a part or the whole of the at least one side face 530 of the film insert 500 when the film insert 500 is in surface contact with the support face. The or each recess conforms to the outer shape of the corresponding fifth fixing portion 621 of any of the above aspects, open in the Z' direction and also to the corresponding side face 530 of the film insert 500 when the film insert 500 is in surface contact with the support face. The or each recess may be opposed to a part or the whole of the corresponding side face 530 of the film insert 500 when the film insert 500 is in surface contact with the support face. If a plurality of the fifth fixing portions 621 is provided, a plurality of the recesses is accordingly provided. In this case, the recesses are arranged at positions corresponding to the fifth fixing portions 621.

The molding method will be hereinafter described. The flat film insert 500 is prepared. The second main face 520 of the film insert 500 is directly placed on the support face of the fifth mold. At this time, a part or the whole of the or each side face 530 of the film insert 500 faces the corresponding recess of the fifth mold.

Thereafter, the fifth and sixth molds are closed together. The film insert 500 is thus disposed in the main part of the cavity of the fifth and sixth molds. Thereafter, plastic material is injected onto the first main face 510 of the film insert 500 in the main part of the cavity. As a result, the plastic material fills the main part of the cavity and partly flows through the at least one recess into the at least one lateral hole 540.

Thereafter, the plastic material filling the cavity and the at least one lateral hole 540 cools and solidifies. The solidified plastic material becomes the molded plastic body 600. Specifically, of the solidified plastic material, the plastic material in the main part of the cavity becomes the main body 610, which is fixed directly to the first main face 510 of the film insert 500; the plastic material in the at least one recess becomes the at least one fifth fixing portion 621, which or each of which is fixed directly to a part or the whole of the corresponding side face 530 of the film insert 500; the plastic material in the at least one lateral hole 540 becomes the at least one sixth fixing portion 622, which or each of which is fixed directly to the wall 541 of the corresponding lateral hole 540 of the film insert 500. The next step is to open the fifth and sixth molds to remove therefrom the film insert 500 and the molded plastic body 600. Thus the molded plastic body 600 is molded directly on the film insert 500.

It should be noted that heat and pressure generated during the injection molding may cause the plastic material in the main part of the cavity and/or the first main face 510 of the film insert 500 to melt into each other or melt independently, the plastic material in the or each recess and/or a part or the whole of the corresponding side face 530 of the film insert 500 to melt into each other or melt independently, and the plastic material in the or each lateral hole 540 and/or the wall 541 of the corresponding lateral hole 540 to melt into each other or melt independently. If so, when the plastic material cools and solidifies, the plastic material in the main part of the cavity is fused with or bonded to the first main face 510 of the film insert 500, the plastic material in the at least one recess is fused with or bonded to a part or the whole of the side face 530 of the film insert 500, and the plastic material in the or each lateral hole 540 is fused with or bonded to the wall 541 of the corresponding lateral hole 540 of the film insert 500. Thus each portion of the molded plastic body 600 may be more firmly fixed to the film insert 500.

The molded article M3 and the molding method of the above various aspects have at least the following technical features. Firstly, the possibility is reduced that the film insert 500 is peeled away from the molded plastic body 600 for the following reasons. The main body 610 of the molded plastic body 600 is fixed directly onto the first main face 510 of the film insert 500. The or each fixing portion 620 has a cross section in the Z-Z' direction of generally lateral T-shape or of generally inverted L-shape, and the fifth fixing portion 621 thereof is fixed directly to a part or the whole of the corresponding side face 530 of the film insert 500, and the at least one sixth fixing portion 622 of the or each fixing portion 620 is fixed directly to the wall 541 of the corresponding lateral hole 540 of the film insert 500. Such fixing structure allows holding of the film insert 500 directly between the main body 610 and the at least one sixth fixing portion 622, reducing the possibility that the film insert 500 is peeled away from the molded plastic body 600. Also, if the film insert 500 includes a plurality of plastic material films, the above fixing structure also reduces the possibility that each two adjacent plastic material films of the film insert 500 are peeled away from each other. Moreover, if the film insert 500 is constituted by a plurality of the plastic material films and if one or a plurality of the fifth fixing portions 621 at least partly cover the one or plurality of the side faces 530 of the film insert 500, moisture hardly enters between the plurality of plastic material films of the film insert 500 from the one or plurality of side faces 530 of the film insert 500. This reduces the possibility of deterioration of the adhesive between the plastic material films due to the ingress of the moisture.

Secondly, the molded article M3 is manufacturable at a reduced cost for the following reasons. As discussed above, the film insert 500 is flat in shape, and the end portions thereof are not bent. The or each fifth fixing portion 621 extends from the main body 610 along a part or the whole of the corresponding side face 530 of the film insert 500, and the or each sixth fixing portion 622 extends from the corresponding fifth fixing portion 621 along the corresponding lateral hole 540 of the film insert 500. Such arrangement obviates the necessity to subject the film insert to a bending process such as a preforming process for the purpose of preventing peeling between the film insert and the molded plastic body as in the conventional example.

Thirdly, the molded article M3 is improved in production yield. Particularly, when the molded plastic body 600 is molded on the first main face 510 of the film insert 500, the second main face 520 of the film insert 500 is entirely supported by the support face of the fifth mold. This arrangement reduces the possibility that the flow of the plastic material moves the or each end portion including the at least one side face 530 of the film insert 500 toward the support face and causes deformation of the or each end portion.

It should be noted that the film insert 500 of any of the above aspects may not be flat in shape, i.e. may be partly curved, bent, and/or uneven. The film insert 500 may of course be curved in entirety such as to have a curved surface as the film insert 100' (see Fig. 3). In this case, the fixing face 611 of the main body 610 of the molded plastic body 600 is curved such as to form a curved surface extending along the first main face 510 of the film insert 500. Otherwise the molded plastic body 600 is configured as described above.

In a variant molded article having a film insert of non-flat shape, the film insert may preferably be subjected to a shaping process as described above. Thereafter, onto the film insert of desired shape the plastic material is molded by the above molding method. In this case, the support face of the fifth mold has a shape conforming to the shape of the film insert, and otherwise the fifth and sixth molds may have similar configurations to those described above. It should be appreciated that the variant molded article having a film insert shaped in this manner also has the first and third technical features described above. In addition, although the film insert is shaped and is no longer flat, there is still no need to subject the film insert to a bending process such as a preforming process for the purpose of preventing peeling between the film insert and the molded plastic body as in the conventional example. Therefore, the variant molded article also has a feature equivalent to the above second technical feature.

It should be noted that the at least one recess need not be provided in the fifth mold, but may be provided in either of the fifth and sixth molds as long as the at least one recess forms part of the cavity.

### Fourth embodiment

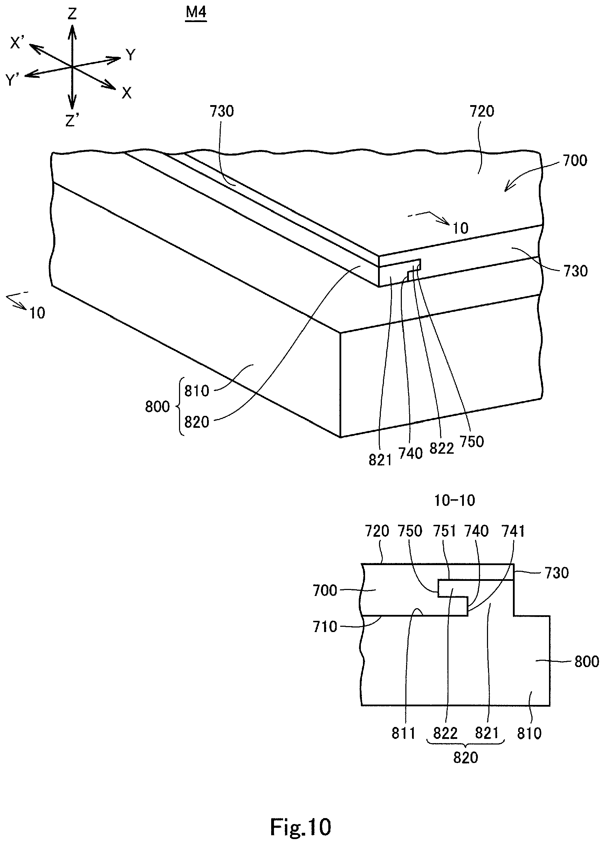

The following is a description, with reference to Figs. 10 to 12, of a film insert molded article M4 (which may be hereinafter referred to simply as a "molded article M4") according to a plurality of embodiments including the fourth embodiment of the invention. The molded article M4 includes a film insert 700 and a molded plastic body 800. It should be noted that the Z-Z' direction shown in Figs. 10 to 12 is the thickness direction of the film insert 700. The Y-Y' direction shown in Figs. 10 to 12 is orthogonal to the Z-Z' direction. The X-X' direction shown in Fig. 10 is orthogonal to the Z-Z' and Y-Y' directions.

The film insert 700 may have the same configuration as the above film insert 100, except for the provision of at least one vertical hole 740 and at least one undercut or lateral hole 750. Accordingly the film insert 700 may be a capacitive touch sensor and may have any one of the configurations A) to D) described above. Alternatively, the film insert 700 may be constituted by two plastic films bonded together and a sensor held therebetween, and the sensor may be of type other than a capacitive touch type (e.g., a resistive touch sensor, a gyro sensor, etc.), a piezoelectric device, a photodiode, or other device. The film insert moulded article may be mounted to or in, or form part of, a larger electronic device.

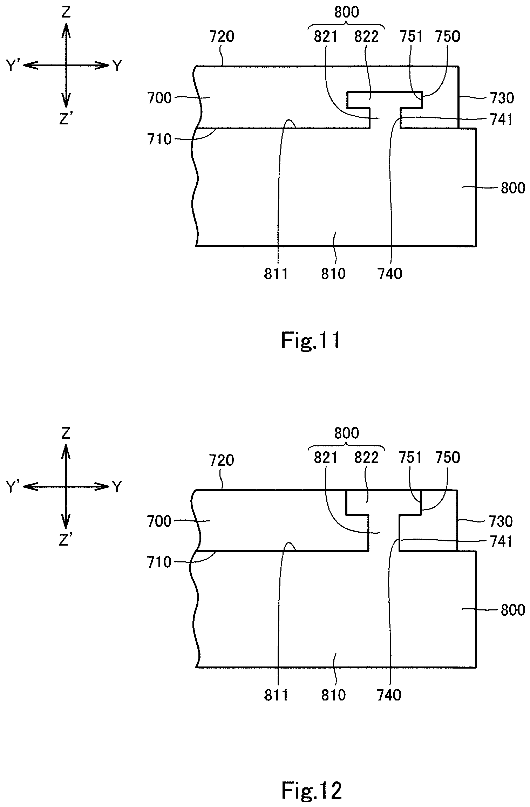

The at least one vertical hole 740 extends from the first main face 710 toward the second main face 720 of the film insert 700. The or each vertical hole 740 may be a blind or bottomed hole opening only to the first main face 710, or may be a through hole extending through the film insert 700 from the first main face 710 to the second main face 720. The or each vertical hole 740 may open to a corresponding side face 730, as shown in Fig. 10, or may not open to a corresponding side face 730, as shown in Figs. 11 and 12. The or each vertical hole 740 has a wall 741.

If a plurality of the vertical holes 740 is provided, the vertical holes 740 may have, for example, any of the following configurations. Configuration 1): each vertical hole 740 is an elongated hole in a corresponding end portion of the film insert 700 of polygonal shape and extends in the longitudinal direction of the corresponding end portion. For example, if two vertical holes 740 are provided, they may respectively extending longitudinally along Y- and Y'-direction-side end portions, or along X- and X'-direction-side end portions, of the film insert 700 of rectangular shape. Configuration 2): the vertical holes 740 are arc-shaped or elongated holes arranged at spaced intervals in and along the at least one end portion of the film insert 700. In this case, the or each end portion of the film insert 700 is provided with a plurality of vertical holes 740. Configuration 3): the vertical holes 740 are short holes positioned at spaced intervals in and along the at least one end portion of the film insert 700. Also in this case, the or each end portion of the film insert 700 is provided with a plurality of vertical holes 740. Configuration 4): the vertical holes 740 are holes of any shape arranged at a plurality of any desired positions (e.g., at corners) of the film insert 700.

The or each undercut lateral hole 750 extends from the corresponding vertical hole 740 of the film insert 700, in a direction crossing the Z-Z' direction. More particularly, in a cross-sectional view in the Z-Z' direction, the or each lateral hole 750 may extend from the corresponding vertical hole 740, as shown in Fig. 10, in a direction orthogonal to the Z-Z' direction (Y direction in Fig. 10), or alternatively, as shown in Figs. 11 and 12, in one and the other directions orthogonal to the Z-Z' direction (Y and Y' directions in Figs. 11 and 12). The at least one lateral hole 750 may open to the second main face 720 as shown in Fig. 12. The or each lateral hole 750 has a wall 751.

If a single vertical hole 740 is provided, a single lateral hole 750 or a plurality of the lateral holes 750 may be provided. In the former case, both the vertical hole 740 and the lateral hole 750 are loop-shaped holes. In the latter case, only the vertical hole 740 is a loop-shaped hole. If a plurality of the vertical holes 740 is provided, a plurality of lateral holes 750 may be provided. In this case, each vertical hole 740 may be provided with a single lateral hole 750 or a plurality of lateral holes 750. If the or each vertical hole 740 is elongated, the corresponding lateral hole 750 may be elongated and extending in the longitudinal direction of the vertical hole 740 or may be short, i.e. have a length smaller than the corresponding vertical hole 740. If the or each vertical hole 740 is arc-shaped, the corresponding lateral hole 750 may be arc-shaped, extending in the circumferential direction of the vertical hole 740, or may be short, , i.e. have a length smaller than the vertical hole 740.

The molded plastic body 800 is molded directly on the first main face 710 of the film insert 700. The molded plastic body 800 includes a main body 810 and at least one fixing portion 820. The main body 810 is fixed directly to (in intimate contact with) the first main face 710 of the film insert 700. The main body 810 has a fixing face 811 fixed directly to (in intimate contact with) the first main face 710 of the film insert 700. The fixing face 811 is a flat face. The or each fixing portion 820 has a cross section in the Z-Z' direction of generally inverted L-shape (see Fig. 10) or of generally lateral T-shape (see Figs. 11 and 12). The or each fixing portion 820 includes at least one seventh fixing portion 821 and at least one eighth fixing portion 822.

The or each seventh fixing portion 821 extends from the main body 810 along the corresponding vertical hole 740 of the film insert 700 and is fixed directly to (in intimate contact with) the wall 741 of the vertical hole 740. The or each seventh fixing portion 821 has an outer shape conforming to the shape of the corresponding vertical hole 740. In other words, the or each seventh fixing portion 821 substantially or completely fills the vertical hole 740. The seventh fixing portion 821 may not completely fill the vertical hole 740.

The or each eighth fixing portion 822 extends from the corresponding seventh fixing portion 821 along the corresponding lateral hole 750 of the film insert 700 and is fixed directly to (in intimate contact with) the wall 751 of the lateral hole 750. The eighth fixing portion 822 has an outer shape conforming to the shape of the lateral hole 750. In other words, the or each eighth fixing portion 822 substantially or completely fills the corresponding lateral hole 750.

If a single vertical hole 740 is provided, a single fixing portion 820 is provided. If a plurality of vertical hole 740 is provided, a plurality of the fixing portions 820 is provided. If the or each vertical hole 740 is provided with a single lateral hole 750, the corresponding fixing portion 820 includes a single seventh fixing portion 821 and a single eighth fixing portion 822. In this case, the or each seventh fixing portion 821 extends from the main body 810 along the corresponding vertical hole 740 of the film insert 700, fills the vertical hole 740, and is fixed directly to the wall 741 of the vertical hole 740. The or each eighth fixing portion 822 extends from the corresponding seventh fixing portion 821 along the corresponding lateral hole 750 of the film insert 700, fills the lateral hole 750, and is fixed directly to the wall 751 of the lateral hole 750.

If the or each vertical hole 740 is provided with a plurality of lateral holes 750, the corresponding fixing portion 820 includes a single seventh fixing portion 821 and a plurality of eighth fixing portions 822. In this case, the or each seventh fixing portion 821 extends from the main body 810 along the corresponding vertical hole 740 of the film insert 700, fills the vertical hole 740, and is fixed directly to the wall 741 of the vertical hole 740. Each eighth fixing portion 822 extends from the corresponding seventh fixing portion 821 along the corresponding lateral hole 750 of the film insert 700, fills the lateral hole 750, and is fixed directly to the walls 751 of the lateral hole 750.

The film insert 700 and the molded plastic body 800 may be made of materials compatible with and/or weldable to each other. In this case, the film insert 700 and the molded plastic body 800 may preferably be, but are not required to be, made of the same kind of plastic materials, the same plastic material, polymer alloys containing the same kind of plastic materials, or polymer alloys containing the same plastic material. The film insert 700 and the molded plastic body 800 may be fixed to each other more firmly by any of the following means. The main body 810 may be directly fused with or directly welded to the first main face 710 of the film insert 700. The or each seventh fixing portion 821 may be directly fused with or directly welded to the wall 741 of the corresponding vertical hole 740 of the film insert 700. The or each eighth fixing portion 822 may be directly fused with or directly welded to the wall 751 of the corresponding lateral hole 750 of the film insert 700.

The following discussion is directed to seventh and eighth molds (not shown) to be used for a film insert molding method of the molded article M4 of any of the above aspects. The seventh and eighth molds as combined provide a cavity of a shape conforming to the outer shape of the molded article M4. The seventh mold has a support face. The support face may be brought into surface contact with the second main face 720 of the film insert 700 when the film insert 700 is placed into the cavity.

The molding method will be hereinafter described. The flat film insert 700 is prepared. The second main face 720 of the film insert 700 is directly placed on the support face of the seventh mold.

Thereafter, the seventh and eighth molds are closed together. The film insert 700 is thus disposed in the cavity of the seventh and eighth molds. Thereafter, plastic material is injected onto the first main face 710 of the film insert 700 in the cavity. As a result, the plastic material fills the cavity and partly flows into the at least one vertical hole 740 and the at least one lateral hole 750 of the film insert 700.

Thereafter, the plastic material filling the cavity, the at least one vertical hole 740, and the at least one lateral hole 750 cools and solidifies. The solidified plastic material becomes the molded plastic body 800. Specifically, of the solidified plastic material, the plastic material in the cavity becomes the main body 810, which is fixed directly to the first main face 710 of the film insert 700; the plastic material in the at least one vertical hole 740 becomes the at least one seventh fixing portion 821, which or each of which is fixed directly to the wall 741 of the corresponding vertical hole 740; the plastic material in the at least one lateral hole 750 becomes the at least one eighth fixing portion 822, which or each of which is fixed directly to the wall 751 of the corresponding lateral hole 750. The next step is to open the seventh and eighth molds to remove therefrom the film insert 700 and the molded plastic body 800. Thus the molded plastic body 800 is molded directly on the film insert 700.

It should be noted that heat and pressure generated during the injection molding may cause the plastic material in the cavity and/or the first main face 710 of the film insert 700 to melt into each other or melt independently, the plastic material in the or each vertical hole 740 and/or the wall 741 of the corresponding one vertical hole 740 of the film insert 700 to melt into each other or melt independently, and the plastic material in the or each lateral hole 750 and/or the wall 751 of the corresponding lateral hole 750 of the film insert 700 to melt into each other or melt independently. If so, when the plastic material cools and solidifies, the plastic material in the cavity is fused with or bonded to the first main face 710 of the film insert 700, the plastic material in the or each vertical hole 740 is fused with or bonded to the wall 741 of the corresponding vertical hole 740 of the film insert 700, and the plastic material in the or each lateral hole 750 is fused with or bonded to the wall 751 of the corresponding lateral hole 750 of the film insert 700. Thus each portion of the molded plastic body 800 may be more firmly fixed to the film insert 700 in this manner.

The molded article M4 and the molding method of the above various aspects have at least the following technical features. Firstly, the possibility is reduced that the film insert 700 is peeled away from the molded plastic body 800 for the following reasons. The main body 810 of the molded plastic body 800 is fixed directly onto the first main face 710 of the film insert 700. The seventh fixing portion 821 of the or each fixing portion 820 is fixed directly to the wall 741 of the corresponding vertical hole 740 of the film insert 700, and the at least one eighth fixing portion 822 of the or each fixing portion 820 is fixed directly to the wall 751 of the at least one lateral hole 750 of the film insert 700. Such fixing structure allows holding of the film insert 700 directly between the main body 810 and the at least one eighth fixing portion 822, reducing the possibility that the film insert 700 is peeled away from the molded plastic body 800. Moreover, if the film insert 700 includes a plurality of plastic material films, the above fixing structure also reduces the possibility that each two adjacent plastic material films of the film insert 700 are peeled away from each other.

Secondly, the molded article M4 is manufacturable at a reduced cost for the following reasons. As discussed above, the film insert 700 is flat in shape, and the end portions thereof are not bent. The or each seventh fixing portion 821 extends from the main body 810 along the corresponding vertical hole 740 of the film insert 700, and the or each eighth fixing portion 822 extends from the corresponding seventh fixing portion 821 along the corresponding lateral hole 750 of the film insert 700. Such arrangement obviates the necessity to subject the film insert to a bending process such as a preforming process for the purpose of preventing peeling between the film insert and the molded plastic body as in the conventional example.

Thirdly, the molded article M4 is improved in production yield if the second main face 720 of the film insert 700 is provided with at least one exposed portion 321. Particularly, when the molded plastic body 800 is molded on the first main face 710 of the film insert 700, the at least one exposed portion 321 of the second main face 720 of the film insert 700 is supported by the support face of the seventh mold. This arrangement reduces the possibility that the flow of the plastic material moves the part surrounding the or each vertical hole 740 of the film insert 700 toward the support face and causes deformation of the surrounding part.

It should be appreciated that the film insert 700 of any of the above aspects may not be flat in shape, i.e. may be partly curved, bent, and/or uneven. The film insert 700 of course be curved in entirety such as to have a curved surface as in the film insert 100' (see Fig. 3). In this case, the fixing face 811 of the main body 810 of the molded plastic body 800 is curved such as to form a curved surface extending along the first main face 710 of the film insert 700. Otherwise the structure of the molded plastic body 800 is configured as described above.

In a variant molded article having a film insert of non-flat shape, the film insert may preferably be subjected to a shaping process as described above. Thereafter, onto the film insert of desired shape the plastic material is molded by the above molding method. In this case, the support face of the seventh mold has a shape conforming to the shape of the film insert, and otherwise the seventh and eighth molds may have similar configurations to those described above. It should be appreciated that the variant molded article having a film insert shaped in this manner also has the first and third technical features described above. In addition, although the film insert is shaped and is no longer flat, there is still no need to subject the at least one end portion of the film insert to a bending process such as a preforming process for the purpose of preventing peeling between the film insert and the molded plastic body as in the conventional example. Therefore, the variant molded article also has a feature equivalent to the above second technical feature.

It should be appreciated that the film insert molded articles described above are not limited to the above embodiments and may be modified in any manner within the scope of the claims. Likewise, the molding methods are also not limited to the above embodiments.

The film insert of any of the above aspects and the molded plastic body of any of the above aspects may be adhered together with an adhesive, such as a binder. In this case, before performing the molding method of any of the above aspects, an adhesive may preferably be applied to the first main face of the film insert and other appropriate parts, and then the molding method should be performed to form the molded plastic body on the first main face of the film insert. In the context of the invention, the direct fixation between each face of the film insert and each portion of the molded plastic body is taken to mean fixation of these elements as directly contact with each other or as adhered to each other. Also, if the film insert and the molded plastic body are adhered to each other and the or each first or fifth fixing portion covers at least a part of the corresponding side face of the film insert, the existence of the first or fifth fixing portion(s) reduces ingress of moisture between the film insert and the main body and thereby reduces the possibility of deterioration of the adhesive between the film insert and the main body due to the ingress of the moisture may be reduced.

It should be appreciated that the materials, the shapes, the dimensions, the number, the positions, etc. of the elements of each film insert molded article and the molding method thereof in the above-described embodiments and their variants are presented by way of example only and can be modified in any manner as long as the same functions can be fulfilled. The aspects and variants of the above-described embodiments can be combined in any possible manner. The Z-Z' direction of the invention may be any direction as long as it is the thickness direction of the film insert of the invention. The Y-Y' direction of the invention may be any direction crossing the Z-Z' direction. The X-X' direction of the invention may be any direction that crosses the Z-Z' and Y-Y' directions and that is located on a different plane from the plane where the Z-Z' and Y-Y' directions are located.

The molded plastic body 200 or 200' may be fixed to the film insert 100 or 100' as described above. However, the molded plastic body 200 or 200' may be independently molded, followed by engaging end portions of the film insert 100 or 100' with a pair of fixing portions 220 or 220' of the molded plastic body 200 or 200'.

### Reference Signs List

M1, M1', M1", M1'": Film insert molded article
100, 100', 100", 100'": Film insert
   100a: Cover film
   100b: Base film
   100c: Electrode
   100d: Base film
   100e: First electrode
   100f: Second electrode
   100g: Protective film
   100h: Insulating layer
   110, 110', 110", 110'": First main face
   120, 120', 120", 120'": Second main face
   130, 130', 130", 130"': Side face
200, 200', 200", 200'": Molded plastic body
   210, 210', 210", 210'": Main body
      211, 211', 211", 211'": Fixing face
   220, 220', 210", 210'": Fixing portion
   221, 221', 221", 221'": First fixing portion
   222, 222', 222", 222"': Second fixing portion
M2: Film insert molded article
300: Film insert
   310: First main face
   320: Second main face
      321: Exposed portion
   330: Side face
   340: Through hole
      341: Wall
400: Molded plastic body
   410: Main body
      411: Fixing face
      420: Fixing portion
         421: Third fixing portion
         422: Fourth fixing portion
            422a: Cut-out
         423: First fixing portion
M3: Film insert molded article
500: Film insert
   510: First main face
   520: Second main face
   530: Side face
   540: Lateral hole
   541: Wall
600: Molded plastic body
   610: Main body
      611: Fixing face
   620: Fixing portion
      621: Fifth fixing portion
      622: Sixth fixing portion
M4: Film insert molded article
700: Film insert
   710: First main face
   720: Second main face
   730: Side face
   740: Vertical hole
      741: Wall
   750: Lateral hole
      751: Wall
800: Molded plastic body
   810: Main body
      811: Fixing face
   820: Fixing portion
      821: Fifth fixing portion
      822: Sixth fixing portion

## Claims

1. A film insert molded article (M1, M1', M1", M1"'), comprising:
a film insert (100, 100', 100", 100"'), the film insert including:
a first main face (110, 110', 110", 110"') on one side (Z') of the film insert (100, 100', 100", 100"') in a thickness direction (Z-Z') thereof,
a second main face (120, 120', 120", 120'") on the other side (Z) of the film insert (100, 100', 100", 100'") in the thickness direction (Z-Z'), the second main face having an end portion, and
a side face (130, 130', 130", 130"') extending from the first main face (110, 110', 110", 110'") to the second main face (120, 120', 120", 120"'); and
a molded plastic body (200, 200', 200", 200"') molded directly on the first main face (110, 110', 110", 110"') of the film insert (100, 100', 100", 100"'), the molded plastic body including:
a main body (210, 210', 210", 210'") fixed directly to the first main face (110, 110', 110", 110"'), and
a fixing portion (220, 220', 220", 220"') with a cross section in the thickness direction (Z-Z') of generally inverted L-shape, the fixing portion (220, 220', 220", 220'") including:
a first fixing portion (221, 221', 221", 221'") extending from the main body (210, 210', 210", 210"') along the side face (130, 130', 130", 130'") of the film insert (100, 100', 100", 100"') and being fixed directly to a part or whole of the side face (130, 130', 130", 130"'); and
a second fixing portion (222, 222', 222", 222'") extending from the first fixing portion (221, 221', 221", 221'") along the second main face (120, 120', 120", 120'") of the film insert (100, 100', 100", 100"') and being fixed directly to the end portion of the second main face (120, 120', 120", 120"').

2. The film insert molded article (M1, M1', M1", M1"') according to claim 1, wherein
the second fixing portion (222, 222', 222", 222"') comprises a plurality of second fixing portions (222, 222', 222", 222"') arranged at spaced intervals along the end portion of the second main face (120, 120', 120", 120"') of the film insert (100, 100', 100", 100'"), each of the second fixing portions (222, 222', 222", 222"') being fixed directly to a respective part of the end portion of the second main face (120, 120', 120", 120"') of the film insert (100, 100', 100", 100'"), and
the end portion of the second main face (120, 120', 120", 120'") of the film insert (100, 100', 100", 100'") is partly exposed from between the second fixing portions (222, 222', 222", 222"').

3. The film insert molded article (M1'") according to claim 1, wherein
the film insert (100"') further comprises at least one first portion (140"') and at least one second portion (150"') formed by cutting an end portion of the film insert (100"'),
the at least one first portion (140"') is curved or bent,
the main body (210"') is fixed directly to a region of the first main face (110'") of the film insert (100"'), the region of the first main face being other than the at least one second portion (150'"),
the first fixing portion (221'") is fixed directly to a region of the side face (130'") of the film insert (100"'), the region of the side face being other than the at least one second portion (150'"), and
the second fixing portion (222"') is fixed directly to a region of the second main face (120'") of the film insert (100"'), the region of the second main face (120"') being other than the at least one second portion (150'").

4. A film insert molded article (M2), comprising:
a film insert (300), the film insert including:
a first main face (310) on one side (Z') of the film insert (300) in a thickness direction (Z-Z') thereof,
a second main face (320) on the other side (Z) of the film insert (300) in the thickness direction (Z-Z'),
a through hole (340) extending through the film insert (300) from the first main face (310) to the second main face (320), and
a wall (341) of the through hole (340); and
a molded plastic body (400) molded directly on the first main face (310) of the film insert (300), the molded plastic body including:
a main body (410) fixed directly to the first main face (310), and
a fixing portion (420) with a cross section in the thickness direction (Z-Z') of generally T-shape or of generally inverted L-shape, the fixing portion (420) including:
a third fixing portion (421) extending from the main body (410) along the through hole (340) of the film insert (300), filling the through hole (340), and being fixed directly to the wall (341) of the through hole (340), and
a fourth fixing portion (422) extending from the third fixing portion (421) along the second main face (320) of the film insert (300) and being fixed directly to a rim of the through hole (340) on the second main face (320).

5. The film insert molded article (M2) according to claim 4, wherein the fourth fixing portion (422) has such a shape that partly exposes the rim of the through hole (340) on the second main face (320) of the film insert (300).

6. The film insert molded article (M2) according to claims 4 or 5, wherein
the film insert (300) further comprises a side face (330) extending from the first main face (310) to the second main face (320),
the fixing portion (420) further comprises a first fixing portion (423), the first fixing portion extending from the main body (410) along the side face (330) of the film insert (300) and being fixed directly to a part or whole of the side face (330) of the film insert (300), and
the fourth fixing portion (422) is fixed directly to the second main face (320) of the film insert (300) and interconnects the third fixing portion (421) and the first fixing portion (423).

7. A film insert molded article (M3), comprising:
a film insert (500), the film insert including:
a first main face (510) on one side (Z') of the film insert (500) in a thickness direction (Z-Z') thereof,
a second main face (520) on the other side (Z) of the film insert (500) in the thickness direction (Z-Z'),
a side face (530) extending from the first main face (510) to the second main face (520),
a lateral hole (540) extending from the side face (530) in a direction crossing the thickness direction (Z-Z'), and
a wall (541) of the lateral hole (540); and
a molded plastic body (600) molded directly on the first main face (510) of the film insert (500), the molded plastic body (600) including:
a main body (610) fixed directly to the first main face (510), and
a fixing portion (620) with a cross section in the thickness direction (Z-Z') of generally lateral T-shape or of generally inverted L-shape, the fixing portion (620) including:
a fifth fixing portion (621) extending from the main body (610) along the side face (530) of the film insert (500) and being fixed directly to a part or whole of the side face (530); and
a sixth fixing portion (622) extending from the fifth fixing portion (621) along the lateral hole (540), filling the lateral hole (540), and being fixed directly to the wall (541) of the lateral hole (540).

8. A film insert molded article (M4), comprising:
a film insert (700), the film insert including:
a first main face (710) on one side (Z') of the film insert in a thickness direction (Z-Z') thereof,
a second main face (720) on the other side (Z) of the film insert in the thickness direction (Z-Z'),
a vertical hole (740) extending from the first main face (710) toward the second main face (720),
a lateral hole (750) communicating with the vertical hole (740) and extending from the vertical hole (740) in a direction crossing the thickness direction (Z-Z'),
a wall (741) of the vertical hole (740), and
a wall (751) of the lateral hole (750); and
a molded plastic body (800) molded directly on the first main face (710) of the film insert (700), the molded plastic body (800) including:
a main body (810) fixed directly to the first main face (710), and
a fixing portion (820) with a cross section in the thickness direction (Z-Z') of generally inverted L-shape or of generally lateral T-shape, the fixing portion (820) including:
a seventh fixing portion (821) extending from the main body (810) along the vertical hole (740) of the film insert (700) and being fixed directly to the wall (741) of the vertical hole (740); and
an eighth fixing portion (822) extending from the seventh fixing portion (821) along the lateral hole (750), filling the lateral hole (750), and being fixed directly to the wall (751) of the lateral hole (750).

9. The film insert molded article (M1, M1', M1", M1"', M2, M3, M4) according to any one of claims 1 to 8, wherein the film insert (100, 100', 100", 100"', 300, 500, 700) and the molded plastic body (200, 200', 200", 200'", 400, 600, 800) are made of materials compatible with and/or weldable to each other.

10. The film insert molded article (M1, M1', M1", M1"', M2, M3, M4) according to any one of claims 1 to 9, wherein the film insert (100, 100', 100", 100"', 300, 500, 700) is a capacitive touch sensor and comprises a plurality of films laminated together in the thickness direction (Z-Z').

11. The film insert molded article (M1, M1', M1", M1"', M2, M3, M4) according to any one of claims 1 to 10, wherein
the main body (210, 210', 210", 210'", 410, 610, 810) comprises a fixing face (211, 211', 211", 211'", 411, 611, 811), the fixing face being curved such as to form a curved surface and fixed to the film insert (100, 100', 100", 100'", 300, 500, 700), and
the film insert (100, 100', 100", 100'", 300, 500, 700) is curved such as to have a curved surface extending along the fixing face (211, 211', 211", 211'", 411, 611, 811).

12. A method of film insert molding, comprising:
preparing a film insert (100, 100', 100", 100'"), the film insert including a first main face (110, 110', 110", 110'"), a second main face (120, 120', 120", 120"') opposite to the first main face (110, 110', 110", 110"'), and a side face (130, 130', 130", 130'") extending from the first main face (110, 110', 110", 110"') to the second main face (120, 120', 120", 120"');
placing the second main face (120, 120', 120", 120'") of the film insert (100, 100', 100", 100'") directly on a support face (11) of a first mold (10) such that a part or whole of the side face (130, 130', 130", 130"') of the film insert (100, 100', 100", 100'") faces a first recess (12) of a cavity (C) of the first mold (10) and a second mold (20), and such that a part or whole of an end portion of the second main face (120, 120', 120", 120"') of the film insert (100, 100', 100", 100"') faces a second recess (13) of the cavity (C);
closing the first (10) and second (20) molds together and thereby placing the film insert (100, 100', 100", 100'") into the cavity (C);
injecting plastic material onto the first main face (110, 110', 110", 110'") of the film insert (100, 100', 100", 100'") in the cavity (C) such that the plastic material partly flows into the first recess (12) and the second recess (13); and
cooling and solidifying the plastic material filled in the cavity (C), so that part of the plastic material in the first recess (12) forms a first fixing portion (221, 221', 221", 221'") fixed directly to the part or whole of the side face (130, 130', 130", 130'") of the film insert (100, 100', 100", 100'"), another part of the plastic material in the second recess (13) forms a second fixing portion (222, 222', 222", 222"') fixed directly to the part or whole of the end portion of the second main face (120, 120', 120", 120'") of the film insert (100, 100', 100", 100"'), and still another part of the plastic material in the cavity (C) excluding the first (12) and second (13) recesses forms a main body (210, 210', 210", 210'") fixed directly onto the first main face (110, 110', 110", 110"') of the film insert (100, 100', 100", 100'").

13. A method of film insert molding, comprising:
preparing a film insert (300), the film insert including a first main face (310), a second main face (320) opposite to the first main face (310), and a through hole (340) extending from the first main face (310) to the second main face (320);
placing the second main face (320) of the film insert (300) directly on a support face of a first mold such that the through hole (340) of the film insert (300) communicates with a bottomed hole in the support face of the first mold;
closing the first mold and a second mold together and thereby placing the film insert (300) into a cavity of the first and second molds;
injecting plastic material onto the first main face (310) of the film insert (300) in the cavity such that the plastic material partly flows into the through hole (340) and the bottomed hole; and
cooling and solidifying the plastic material filled in the cavity, so that part of the plastic material in the through hole (340) forms a third fixing portion (421) fixed directly to a wall (341) of the through hole (340) of the film insert (300), another part of the plastic material in the bottomed hole forms a fourth fixing portion (422) fixed directly to a rim of the through hole (340) on the second main face (320) of the film insert (300), and still another part of the plastic material in the cavity forms a main body (410) fixed directly onto the first main face (310) of the film insert (300).

14. A method of film insert molding, comprising:
preparing a film insert (500), the film insert including a first main face (510), a second main face (520) opposite to the first main face (510), a side face (530) extending from the first main face (510) to the second main face (520), and a lateral hole (540) extending from the side face (530);
placing the second main face (520) of the film insert (500) directly on a support face of a fifth mold such that a part or whole of the side face (530) of the film insert (500) faces a recess of a cavity of the fifth mold and a sixth mold;
closing the fifth and sixth molds together and thereby placing the film insert (500) into the cavity;
injecting plastic material onto the first main face (510) of the film insert (500) in the cavity such that the plastic material partly flows into the recess and the lateral hole (540); and
cooling and solidifying the plastic material filled in the cavity, so that part of the plastic material in the recess forms a fifth fixing portion (621) fixed directly to the part or whole of the side face (530) of the film insert (500), another part of the plastic material in the lateral hole (540) forms a sixth fixing portion (622) fixed directly to a wall of the lateral hole (540) of the film insert (500), and still another part of the plastic material in the cavity excluding the recess forms a main body (610) fixed directly onto the first main face (510) of the film insert (500).

15. A method of film insert molding, comprising:
preparing a film insert (700), the film insert including a first main face (710), a second main face (720) opposite to the first main face (710), a vertical hole (740) extending from the first main face (710) toward the second main face (720), and a lateral hole (750) communicating with and extending from the vertical hole (740);
placing the second main face (720) of the film insert (700) directly on a support face of a seventh mold;
closing the seventh mold and an eighth mold together and thereby placing the film insert (700) into the cavity;
injecting plastic material onto the first main face (710) of the film insert (700) in the cavity such that the plastic material partly flows into the vertical hole (740) and the lateral hole (750); and
cooling and solidifying the plastic material filled in the cavity, so that part of the plastic material in the vertical hole (740) forms a seventh fixing portion (821) fixed directly to a wall (741) of the vertical hole (740) of the film insert (700), another part of the plastic material in the lateral hole (750) forms an eighth fixing portion (822) fixed directly to a wall (751) of the lateral hole (750) of the film insert (700), and still another part of the plastic material in the cavity forms a main body (810) fixed directly onto the first main face (710) of the film insert (700).
